# FASCICULE DE BREVET EUROPEEN

(11) **EP 3 352 968 B1**
(45) Date de publication et mention de la délivrance du brevet: **17.03.2021**
(21) Numéro de dépôt: 16785198.9
(22) Date de dépôt: 21.09.2016
(51) Int. Cl.: B29C 65/16, F16L 47/02, B29C 65/82

(54) **METHODE D'ASSEMBLAGE D'UN MANCHON TUBULAIRE DE JONCTION ET D'UN TUBE DE CHEMISAGE DE CONDUITE PAR SOUDAGE LASER**
VERFAHREN ZUR MONTAGE EINER ROHRFÖRMIGEN VERBINDUNGSHÜLSE UND EINES LEITUNGSVERKLEIDUNGSROHRS DURCH LASERSCHWEISSEN
METHOD FOR ASSEMBLING A TUBULAR JOINING SLEEVE AND A CONDUIT LINING TUBE BY LASER WELDING

(30) Priorité: 23.09.2015 FR 1558960
(43) Date de publication de la demande: 01.08.2018
(73) Titulaire: SAIPEM S.A., 78180 Montigny-le-Bretonneux (FR)
(72) Inventeur: PIONETTI, François-Régis, 50450 La Baleine (FR); LIROLA, François, 92400 Courbevoie (FR); MAJDOUB, Taoufik, 93000 Bobigny (FR)
(74) Mandataire: Cabinet Beau de Loménie
(86) Numéro de dépôt international: PCT/FR2016/052392
(87) Numéro de publication internationale: WO 2017/051118

(56) Documents cités:
- FR-A1- 2 382 970
- FR-A1- 2 963 654
- JP-A- S6 060 497
- JP-A- 2011 240 669

## Description

La présente invention concerne une méthode de réalisation de l'assemblage par soudage laser de tubes en matériaux thermoplastiques. Plus particulièrement, la présente invention s'applique à l'assemblage d'au moins deux tubes disposés bout à bout ou se chevauchant au moins en partie coaxialement.

Plus particulièrement encore, la présente invention concerne un assemblage de (a) un manchon tubulaire de jonction inséré à l'intérieur d'une conduite, notamment d'une conduite sous-marine, au niveau de la jonction entre deux éléments de conduite en acier soudés ou destinés à être soudés métalliquement bout à bout, et (b) un tube de chemisage interne ou « liner » appliqué en revêtement interne desdits éléments de conduite.

La présente invention concerne plus particulièrement un procédé de mise en place d'un manchon tubulaire de jonction en matière plastique pour l'assemblage de conduite à partir de dits éléments unitaires de conduite et mise en œuvre d'un soudage laser, ledit manchon étant appliqué et solidarisé au dit chemisage par soudage laser au niveau de la jonction entre les extrémités bout à bout de deux éléments unitaires de conduite.

La présente invention se rapporte plus particulièrement à l'assemblage de conduites véhiculant des fluides corrosifs, notamment des conduites sous-marines véhiculant de l'eau de mer sous pression destinée à être injectée dans des puits de champs pétroliers, et plus particulièrement encore des conduites de liaison reposant au fond de la mer ou des conduites de liaison fond/surface.

La présente invention concerne plus particulièrement encore le raccordement de deux éléments unitaires de conduite à chemisage interne, et plus particulièrement encore d'éléments de 24 m ou 48 m de longueur installées sur des champs pétrolifères en mer profonde, par 2000 à 3000 m, voire plus, à partir de navire de pose équipés de tours de pose en J.

De façon connue, les extrémités desdits éléments de conduite sont assemblés bout à bout par soudage et le chemisage interne à l'intérieur desdits éléments de conduite s'arrêtent à une distance significative, par exemple 100 à 300 mm de l'extrémité desdits éléments de conduite, de manière à ce que l'échauffement de la paroi en acier lors du soudage de leurs extrémités, ne vienne pas endommager ledit chemisage. Le problème qui se pose alors est d'assurer la protection contre la corrosion de la zone non chemisée comprise entre l'extrémité de la chemise de l'élément de conduite N et l'extrémité de la chemise de l'élément de conduite suivant N+1.

On connait la mise en œuvre de soudage par laser pour souder deux composants plastiques sous forme de film, plaque ou pièce injectée, que l'on soude l'un sur l'autre. Pour souder deux composants plastiques l'un sur l'autre par soudage laser, il suffit que le premier composant traversé par le rayonnement laser soit transparent ou translucide à la longueur d'onde considérée, et le deuxième composant soit absorbant. On garantit ainsi une concentration de chaleur localisée au point d'incidence du rayon ou faisceau de rayon laser sur la partie absorbante qui par conduction se transmet à la partie transparente en contact au niveau du plan de joint entre les deux composants plastiques transparent et respectivement absorbant.

Des procédés d'assemblage de pièces par soudage laser sont adaptés à l'assemblage de tubes par assemblage de leurs extrémités bout à bout. Dans JP 2011/240669, il s'agit en fait de souder deux parties d'un réservoir. On réalise un soudage laser de deux des extrémités de deux parties tubulaires en plastique disposées bout à bout au niveau de leurs surfaces frontales. La pression exercée sur les surfaces de contact à souder est dirigée axialement (et non radialement) et on insiste sur le dispositif mécanique de bridage bout à bout comprenant des éléments de bridage 40 de maintien en fixation l'une contre l'autre des deux parties tubulaires à souder bout à bout, lesdits éléments de bridage 40 étant positionné à l'extérieur en périphérie des deux parties tubulaires à souder. Enfin, il n'est pas envisagé de translations axiales du miroir qui réfléchit un rayon laser émis dans la direction axiale des deux parties tubulaires depuis l'extérieur des deux parties tubulaires et/ou une variation en inclinaison dudit miroir par rapport à la direction axiale.

Dans le document FR 2 382 970, on décrit également un assemblage de pièces tubulaires bout à bout par soudage laser de leurs surfaces frontales d'extrémité à 90° par rapport à la direction axiale. Là encore, un dispositif mécanique de bridage complexe comprenant des pistons 18 agissant sur des coins 26 doit être mis en œuvre pour opérer la pression requise pour maintenir en pression l'un contre l'autre les deux parties tubulaires à souder. Il résulte de la disposition de ce système mécanique que l'orientation du rayon laser est nécessairement à 90° par rapport à la direction axiale et n'autorise pas la variation d'inclinaison du miroir 42 par rapport à la direction axiale d'une part, et/ou sa translation dans la direction axiale pour déplacer le rayon laser incident.

Dans EP 722 824, on décrit un manchon tubulaire de jonction à électro-fusion équipé de bobines de chauffage, permettant de réaliser le soudage dudit manchon avec le chemisage interne (dénommé « liner »), présent dans un élément de conduite en acier, ledit manchon tubulaire de jonction permettant l'assemblage de deux éléments de conduite bout à bout en assurant la jonction entre les deux liners des deux éléments de conduite d'une part et, d'autre part, en permettant la réalisation de la soudure de jonction entre les deux éléments de conduite.

Dans WO 2010/041016, on décrit un manchon permettant de réaliser le soudage par électro-fusion avec un fil chauffant par effet Joule entre deux tuyaux équipés de liners plastiques. Dans WO 2012/017171, la demanderesse a décrit un mode d'assemblage de deux éléments de conduite en acier revêtus d'un chemisage interne (aussi dénommé « liner ») à l'aide d'un manchon tubulaire de jonction, amélioré en terme d'étanchéité, notamment dans le cadre d'un assemblage sur site à partir d'un navire en mer, d'éléments de conduite de longueur réduite adaptée à la pose à partir d'un navire en mer.

Pour ce faire, dans WO 2012/017171, le manchon tubulaire de jonction est intercalé entre 2 éléments de conduite en acier à chemisage interne en matériau thermoplastique assemblés bout à bout, les extrémités des deux éléments de conduite étant soudées l'une à l'autre. Ledit manchon tubulaire de jonction réalisé en matériau thermoplastique, de préférence identique à celui dudit chemisage, est inséré à l'intérieur de la conduite au niveau des extrémités bout à bout des deux éléments de conduite, de manière à ce que les parties terminales aux extrémités dudit manchon soient, en partie au moins, en contact étanche respectivement avec des parties terminales aux extrémités desdits chemisages internes des deux éléments de conduite. Ledit manchon tubulaire de jonction présente à chacune desdites parties terminales du manchon au niveau de ladite zone de contact étanche avec les parties terminales desdits chemisages un fil chauffant par effet joule, de préférence disposé en spirale, en surface externe de chaque dite partie terminale aux extrémités dudit manchon. Ladite zone de contact étanche est une zone de soudure par fusion entre elles des matières constitutives de chaque dite partie terminale du manchon et respectivement chaque dite partie terminale de dit chemisage en contact l'une avec l'autre et parcourues par ledit fil chauffant.

Cette étanchéité du contact manchon/chemise est importante pour éviter tout contact entre l'eau de mer et la zone de la soudure en vis-à-vis dudit manchon tubulaire. Un tel contact direct pourrait en effet conduire, en cas de pénétration d'eau entre le manchon et la conduite, lorsque la conduite est une conduite d'injection d'eau, à des phénomènes électro-chimiques de corrosion de la conduite en acier et de la soudure dans la mesure où ladite liaison mécanique entre le manchon et le chemisage n'est pas nécessairement étanche.

Ladite zone de fusion est obtenue par alimentation électrique dudit fil chauffant par effet joule créant un chauffage de ladite zone au niveau de l'interface desdites surfaces de contact des parties terminales du manchon et du chemisage. Dans ladite zone de soudure par fusion (ci-après en abrégé « zone de fusion »), la fusion est donc réalisée dans ce cas par le procédé connu dit « électro-fusion », qui permet de réaliser une zone de contact étanche relativement étendue dans la zone parcourue par le fil chauffant et autour de celui-ci.

La méthode de soudage par électro fusion impose une épaisseur minimale de 8 mm des parties terminales du manchon et des chemisages à souder pour permettre de passer les fils électriques et avoir une bonne efficacité. En particulier, du fait que le manchon doit être traversé par le fil chauffant pour rejoindre sa surface externe lequel fil chauffant provoquerait alors la fusion du manchon sur toute son épaisseur si celle-ci n'est pas suffisamment épaisse.

Fonctionnellement, au regard de ses propriétés d'anti corrosion un chemisage interne de 1 à 5 mm serait suffisant. Toutefois au regard des contraintes exercées sur le tube de chemisage interne lors de sa mise ne place, le tube de chemisage thermoplastique étant introduit par traction et striction dans une filière à l'intérieur de la conduite en acier, pour des éléments unitaires de conduites de 50 m environ, on ne descendra pas au-dessous de 3 mm d'épaisseur de préférence car alors le placage sur la conduite en acier pourrait être de mauvaise qualité. L'épaisseur idéale est donc un liner de 3 à 5 mm.

Le but de la présente invention est de s'affranchir des bobines de soudage par électro-fusion qui tendent à créer des défauts dans la zone de soudure, ce qui peut la rendre potentiellement plus fragile, et qui impliquent des zones de fusion relativement étendues et donc requièrent des temps de refroidissement relativement importants.

De manière générale, le but de la présente invention est de fournir un soudage par fusion de matériaux plastiques au niveau de l'assemblage de deux éléments tubulaires thermoplastiques bout à bout ou se chevauchant qui soit plus précis, plus fiable et plus rapide à réaliser.

Un autre but est de fournir un soudage par fusion de matériaux thermoplastiques d'assemblage de deux éléments tubulaires qui supprime le risque de fuites pouvant cheminer le long du fil de chauffe, d'où résulte une soudure non-étanche comme discuté dans WO 2012/017171.

Un autre but est de fournir un soudage d'un manchon de jonction et d'un chemisage interne de conduite qui permette de mettre en œuvre un chemisage interne de faible épaisseur notamment inférieure à 5 mm.

Pour ce faire, la présente invention fournit une méthode de réalisation de l'assemblage de tubes en matériaux thermoplastiques, dans laquelle on assemble au moins deux tubes, caractérisée en ce qu'on réalise ledit assemblage par soudage laser de deux surfaces de contact de révolution appliquées l'une contre l'autre de respectivement deux parties de deux tubes, de préférence des parties d'extrémités, comprenant au moins :
- une partie terminale d'un premier tube, transparente à la longueur d'onde du laser, et
- une partie terminale du deuxième tube, absorbante à la longueur d'onde du laser, et
ledit soudage étant réalisé à l'aide d'un rayon laser que l'on déplace en rotation (R) à 360° par rapport à l'axe longitudinal XX' commun des premier et deuxième tubes, un dispositif laser ou une tête du dispositif laser émettant ledit rayon laser étant disposé(e) à l'intérieur de l'un desdits premier et deuxième tubes de telle sorte que ledit rayon laser traverse d'abord ladite partie terminale transparente du premier tube pour atteindre une zone de ladite surface de contact de révolution de la partie terminale absorbante du deuxième tube et, de préférence, on applique une pression sur lesdites surfaces de contact l'une contre l'autre, pour réaliser une zone de soudure par fusion entre lesdites surfaces de contact de révolution de la partie transparente du premier tube et de la partie terminale absorbante du deuxième tube,
caractérisé en ce que ledit premier tube est un manchon tubulaire de jonction en matériau thermoplastique inséré à l'intérieur d'une conduite comprenant au moins deux éléments de conduite en acier, les deux éléments de conduite comprenant chacun un tube de chemisage interne en matériau plastique constituant chacun un dit deuxième tube, ledit manchon tubulaire de jonction étant inséré au niveau de l'assemblage bout à bout des extrémités non chemisées des deux éléments de conduite soudées métalliquement ou destinées à être soudées métalliquement l'une à l'autre, lesdites parties terminales du manchon et du chemisage étant en contact l'une avec l'autre, au niveau de surfaces de révolution externes desdites parties terminales du manchon en contact avec des surfaces de révolution internes desdits chemisages, lesdites surfaces de révolution desdites parties terminales du manchon et de chemisage présentant le même axe de révolution que ladite conduite et se chevauchant dans la direction axiale, et on réalise ledit soudage, de préférence en appliquant une dite pression sur la surface interne dudit manchon dans la direction radiale au niveau desdites surfaces de révolution en contact.

On comprend que ladite zone de soudure est localisée au niveau des points de contact entre ladite surface de contact de la partie transparente du premier tube et les points de contact du rayon laser sur ladite surface de contact de révolution de la partie absorbante du deuxième tube. Plus particulièrement, la largeur de la zone de soudure correspond sensiblement à la largeur du faisceau laser soit en général d'environ 1 à 5 mm et est concentrée sur l'interface des deux surfaces de contact à souder grâce à la réflexion du rayon sur la partie absorbante.

On comprend aussi que ladite zone de soudure s'étend sur tout le pourtour desdites surfaces de contact de révolution lorsque l'on déplace le rayon laser en rotation (R) à 360° par rapport à l'axe XX' commun des tubes.

La soudure par laser résulte de la fusion entre elles des matières constitutives des deux surfaces de contact, ladite soudure étant localisée au niveau de la zone des points de contact du rayon laser sur les surfaces de contact. Ladite zone de soudure forme une zone de contact étanche entre ladite surface de contact de la partie transparente du premier tube et ladite surface de contact de révolution de la partie absorbante du deuxième tube.

On entend ici par « rayon laser » un faisceau unidirectionnel de rayonnement laser et par « transparent au rayonnement laser » que ladite matière laisse passer la lumière à plus de 20%, de préférence à plus de 50%.

Le soudage laser selon la présente invention est avantageux en ce qu'il permet d'obtenir une zone de soudure plus nette et précise, notamment mieux localisée et surtout sans lèvres ou cordon de soudure requérant un éventuel usinage.

Ainsi, dans le cas de la technologie par soudage laser, il devient plus aisé de fournir un manchon de jonction tubulaire à souder qui soit de forme quelconque, notamment avec une coupe franche perpendiculaire à l'axe du liner auquel il doit être assemblé le cas échéant et/ou pour des liners de faible épaisseur, notamment inférieur à 5 mm, comme il sera explicité ci-après.

Le soudage par laser selon la présente invention confère donc une qualité de soudure accrue sans risque de fuite avec un risque de défaillance de soudure réduit, et du fait de la localisation très précise de la zone de soudure, une durée de refroidissement également réduite par rapport à l'électro-fusion avec une bobine et fil de chauffe, la chaleur au point de fusion étant localisé à la taille du faisceau.

Le mode de réalisation avec une zone de soudure par laser est avantageux en ce qu'il permet d'assurer une étanchéité plus complète et plus fiable de la surface de contact entre lesdites parties terminales du manchon et du chemisage afin d'éviter tout risque de contact de soudure métallique avec l'eau des conduites lorsque ladite conduite véhicule de l'eau et ainsi éviter tout risque d'envahissement de la zone située entre la surface externe du manchon et la surface interne desdits éléments de conduite, ce qui ne manquerait pas de créer un rétrécissement du diamètre interne du manchon, c'est-à-dire de la section de passage du fluide, et donc des perturbations dans l'écoulement du fluide à l'intérieur du manchon, sans compter le risque de contact de ladite soudure avec l'eau, lorsque ladite conduite véhicule de l'eau.

Enfin, le soudage par laser selon la présente invention offre la possibilité de souder à l'intérieur d'un tube à des distances importantes, notamment à plus de 1000m, grâce à un ombilical relativement léger, contenant les conduites d'alimentation et faisceaux de fibres optiques pour la transmission du faisceau de rayons laser.

Un autre avantage de la présente invention par rapport au soudage par électro-fusion est de supprimer la contrainte de mise en œuvre de fils chauffants et positionnement des connecteurs électriques des fils chauffants au niveau d'un des tubes, notamment un dit manchon tubulaire de jonction.

Un autre avantage de la présente invention est que l'énergie nécessaire au laser est relativement plus faible, par exemple de l'ordre de 50 à 100 W, la fusion par laser en pratique pouvant se faire valablement sur 1 à 2 mm d'épaisseur tant sur la partie transparente que la partie absorbante. La soudure est d'autant moins profonde du côté de la partie absorbante que celle-ci est plus absorbante et donc plus chargée en agent opacifiant notamment en noir de carbone.

Un autre avantage de ce mode d'assemblage par soudage laser est qu'il permet un contrôle aisé de la qualité du soudage par analyse de l'absorption de la zone soudée. Pour cela, il suffit d'envoyer dans les mêmes conditions avec le même dispositif sur ladite zone de soudure un deuxième rayon laser de contrôle et analyser la puissance absorbée par analyse à l'aide de cellules photosensibles du deuxième rayon de retour se réfléchissant sur les zones non soudées comme explicité ci-après.

Tous ces avantages du soudage laser selon la présente invention permettent d'assurer une fiabilité maximale ainsi que des temps d'opération optimisés lors de la réalisation de la soudure ainsi que lors de son utilisation pour l'assemblage de tubes selon la présente invention.

Un tel mode de réalisation est aussi avantageux en ce qu'il permet de mettre en œuvre un liner de plus faible épaisseur que par soudage par électro-fusion.

Pour le soudage laser, au contraire du soudage par électro-fusion ; plus l'épaisseur est fine et plus le soudage est efficace car l'absorption est plus faible.

L'épaisseur requise du chemisage interne est principalement une conséquence de la longueur de la conduite dans laquelle on l'applique par étirement plastique compte tenu du risque de le déchirer ou de l'étirer irréversiblement lors de sa mise en place.

De préférence, ledit chemisage interne et ledit manchon tubulaire de jonction présentent une épaisseur inférieure ou égale à 5 mm, de préférence de 3 à 5 mm.

Un tel mode de réalisation avec des chemisages internes de faible épaisseur inférieure à 5 mm est possible pour des longueurs de conduites sur des éléments unitaires de conduite ou des rames de moins de 100 m, voire moins de 50 m pour des épaisseurs jusqu' à 3 mm.

Un tel mode de réalisation est doublement avantageux :
a) Tout d'abord, dans ce mode de réalisation, la mise en place du tube de chemisage est plus aisée car :
   - du fait de la faible épaisseur du chemisage, la traction requise sur le tube de chemisage pour son étirement lors de sa pose est réduite, et
   - du fait de la faible épaisseur du manchon, lesdites surfaces de contact cylindriques desdits chemisage interne et dit manchon à souder se chevauchant pourront être superposées sans requérir d'usinage du chemisage interne c'est-à-dire d'épaisseur constante et donc sans former une dite surface de contact d'épaisseur réduite par rapport à l'épaisseur de la partie courante dudit chemisage, et
b) En second lieu, en cas de superposition des parties terminales du manchon et du chemisage, les pertes de charges peuvent être diminuées du fait de la faible épaisseur du manchon, le différentiel de diamètre interne entre la surface interne dudit chemisage et celle dudit manchon étant suffisamment faible pour ne plus perturber l'écoulement du fluide dans la conduite. Ainsi, les pertes de charges sont globalement diminuées en dépit l'effet d'augmentation des pertes de charge résultant de la diminution du diamètre interne de la conduite avec des chemisages internes de faible épaisseur.

Ladite zone de soudure et contact étanche s'étend sur tout le pourtour des surfaces de révolution externes desdites parties terminales du manchon et desdites surfaces de révolution internes desdites parties terminales du chemisage en contact l'une avec l'autre, c'est-à-dire sur 360° autour de leur axe de révolution XX'. En revanche, ladite zone de contact étanche peut s'étendre sur une partie simplement des longueurs dans la direction axiale desdites surfaces de révolution des parties terminales de manchon et chemisage en contact l'une avec l'autre.

On comprend que lesdites surfaces de révolution desdites parties terminales du manchon et du chemisage présentent le même axe de révolution que ladite conduite et que ledit manchon en position à l'intérieur de ladite conduite.

De façon connue, chaque dit élément de conduite comprend un chemisage interne en matériau plastique, de préférence thermoplastique, se terminant à une certaine distance L de l'extrémité dudit élément de conduite, de préférence une partie au moins de la surface externe de chaque partie terminale aux extrémités du chemisage interne pouvant être verrouillée par collage contre la surface interne correspondante de la paroi en acier de la conduite, à l'aide d'une colle de préférence du type époxy ou polyuréthane.

De façon connue encore, le manchon tubulaire de jonction s'étend dans une direction longitudinale axiale XX' de la conduite sur une longueur recouvrant au moins les longueurs de conduite non recouvertes de dits chemisages, c'est-à-dire au moins 2 fois ladite distance L.

On comprend que :
- la surface externe de la partie courante du manchon adjacente à ladite partie terminale de manchon est située en vis-à-vis des parties des parois internes des extrémités desdits éléments de conduite assemblées non recouvertes de dit chemisage, et
- les parties terminales aux extrémités du manchon présentent des surfaces de formes identiques ou complémentaires aux surfaces des parties terminales aux extrémités desdits chemisages avec lesquelles elles sont en contact.

Plus particulièrement, ledit rayon laser est perpendiculaire aux dites surfaces de contact ou incliné (α₁), de préférence dans une fourchette de 0 à 60°, par rapport à la perpendiculaire aux dites surfaces de contact.

Plus particulièrement encore, ledit rayon laser est incliné par rapport à la perpendiculaire aux surfaces de contact à souder d'un angle de 30 à 60°, notamment 45°.

Plus particulièrement, lesdites surfaces de contact de révolution desdits premier et deuxième tubes à souder se chevauchant sont de forme cylindrique ou tronconique de même axe que l'axe longitudinal XX' desdits tubes.

Dans une variante de réalisation, de préférence pour des manchons et chemisage d'épaisseur supérieure à 5 mm, notamment de 5 à 10 mm, lesdits manchon et chemisages sont caractérisés en ce que :
- ledit chemisage interne présente à au moins une extrémité une partie terminale d'épaisseur réduite par rapport à l'épaisseur de la partie courante dudit chemisage, définissant une forme concave avec une surface interne formant une dite surface de contact de révolution, de préférence tronconique ou cylindrique, de diamètre interne plus grand que celui de la surface interne de la partie courante dudit chemisage, et
- ledit manchon présente à au moins une extrémité une partie terminale d'épaisseur réduite par rapport à l'épaisseur de la partie courante adjacente dudit manchon, ladite partie terminale du manchon définissant une forme convexe apte à chevaucher et buter contre la partie terminale concave d'épaisseur réduite dudit chemisage avec laquelle elle est en contact, ladite partie terminale du manchon définissant une surface externe correspondant à une dite surface de contact de révolution, de préférence tronconique ou cylindrique, de diamètre externe inférieur à celui de la partie courante adjacente du manchon et une surface interne cylindrique sensiblement de même diamètre interne que celui des partie courante du chemisage et partie courante du manchon, et on réalise le soudage par laser de ladite surface interne de révolution constituant une dite surface de contact dudit chemisage et de ladite surface externe de révolution constituant une dite surface de contact dudit manchon.

On comprend que de par leurs formes complémentaires, lesdites partie terminale du manchon et partie terminale d'épaisseur réduite du chemisage permettent l'insertion du manchon contre la surface interne de la partie terminale d'épaisseur réduite du chemisage par simple encastrement en force dudit manchon dans la direction longitudinale axiale XX' à l'intérieur dudit élément de conduit et la surface externe de dite partie terminale d'épaisseur réduite de manchon en contact avec la surface interne de partie terminale d'épaisseur réduite de chemise présentent une forme identique et sont disposées l'une par rapport à l'autre pour épouser leur contour identique.

De préférence, lesdites surface interne de la partie terminale d'épaisseur réduite du chemisage et surface externe de la partie terminale d'épaisseur réduite du manchon, en contact l'une contre l'autre sont de même forme tronconique de même axe XX' que les dit manchon et dite conduite.

On comprend que de par leurs formes concave et respectivement convexe complémentaires, lesdites surface interne et surface externe tronconiques présentent un angle au sommet sensiblement de même valeur. Dans ce mode de réalisation à surface de contact tronconique, lesdites parties terminales d'épaisseur réduite du manchon et du chemisage en contact présentent une épaisseur augmentant depuis les extrémités du manchon et respectivement du chemisage, vers la partie courante adjacente du manchon et respectivement du chemisage, et la spirale de ladite zone de soudure (décrite ci-après) progresse avec des spires augmentant de diamètre depuis sa dite première extrémité située du côté de la partie terminale du manchon de plus petite épaisseur vers sa dite deuxième extrémité située du côté de la partie terminale du manchon de plus grande épaisseur.

Dans une variante, lesdites surface interne de la partie terminale d'épaisseur réduite du chemisage et surface externe de la partie terminale d'épaisseur réduite du manchon, en contact l'une contre l'autre sont de même forme cylindrique de même axe XX' que les dit manchon et dite conduite, de préférence l'extrémité de la partie terminale d'épaisseur réduite du manchon venant buter contre un épaulement délimitant les surfaces internes desdites partie courante et partie terminale d'épaisseur réduite du chemisage.

Dans ce mode de réalisation à surface de contact cylindrique, lesdites parties terminales d'épaisseur réduite du manchon et du chemisage en contact présentent une épaisseur de préférence identique sensiblement constante, et le cas échéant la spirale de ladite zone de soudure progresse avec des spires de diamètre constant depuis sa dite première extrémité située du côté de la partie terminale du manchon de plus petite épaisseur vers sa dite deuxième extrémité située du côté de la partie terminale du manchon de plus grande épaisseur.

Lorsque la surface interne de la partie terminale d'épaisseur réduite du manchon est conique ou cylindrique, la spirale formée par ladite zone de soudure est tridimensionnelle c'est-à-dire de forme de spirale ou hélicoïdale car ses spires sont espacées dans la direction longitudinale du manchon.

Dans les différents modes de réalisation ci-dessus dits à surface de contact des parties terminales du manchon et chemise conique ou cylindrique, la surface de contact présente une topologie de type cône dont le demi angle au sommet a' est compris entre 0 et 90° pour les surface conique, et de type cône fictif avec un demi angle au sommet α = 0° pour les surfaces cylindriques, de sorte que dans tous les cas ladite première extrémité de spirale est située du côté de la pointe du cône ou du cône fictif.

Dans un autre mode de réalisation, notamment dans le cas de chemisage interne et dit manchon sont de plus faible épaisseur, notamment inférieure à 5 mm, on met en oeuvre :
- un dit chemisage interne présentant à au moins une extrémité une partie terminale de même épaisseur que l'épaisseur de la partie courante dudit chemisage, définissant une surface interne cylindrique correspondant à une dite surface de contact, de même diamètre interne que celui de la surface interne de la partie courante dudit chemisage, et
- ledit manchon présente à au moins une extrémité une partie terminale de même épaisseur que l'épaisseur de la partie courante adjacente dudit manchon, ladite partie terminale du manchon définissant :
   - une surface externe cylindrique correspondant à une dite surface de contact de révolution, de diamètre externe sensiblement identique à celui de la surface interne dudit chemisage et
   - une surface interne cylindrique de diamètre interne inférieur à celui de la surface interne dudit chemisage,
- ladite partie terminale du manchon étant ainsi apte à chevaucher de manière superposée la partie terminale dudit chemisage avec laquelle elle est en contact, et
- on réalise le soudage par laser de ladite surface interne de cylindrique constituant une dite surface de contact dudit chemisage et de ladite surface externe cylindrique constituant une dite surface de contact dudit manchon.

Plus particulièrement, on réalise une zone de soudure continue de forme de spirale ou hélicoïdale ou une pluralité de zones de soudure circulaires concentriques ou disposées côte à côte parallèlement le long de la direction axiale desdites surface de contact.

La largeur d'une zone de soudure ainsi réalisée par soudage laser correspond à la largeur du faisceau de rayon laser, soit en pratique de 1 à 5 mm, de préférence de 2 à 4 mm.

Dans un mode de réalisation, on espace les cercles d'un pas de translation de 1 à 10 mm, de préférence de 3 à 5 mm, ou on forme une zone de soudure hélicoïdale ou de forme de spirale dont le pas de l'hélice est de même valeur de 1 à 10 mm, de préférence de 3 à 5 mm. On obtient ainsi une zone de soudure ne recouvrant pas toute la surface desdites surfaces de contact parcourue dans la direction de translation.

Dans un autre mode de réalisation, on réalise une pluralité de zones circulaires ou hélicoïdales ou spiralées dont les cercles ou les hélices ou spirales de la zone de soudure sont juxtaposés de manière accolée, en déplaçant en translation la tête de laser d'une valeur identique à la largeur de la zone circulaire ou hélicoïdale ou spiralée, pour obtenir une zone de soudure à surface de révolution, notamment tronconique ou cylindrique, recouvrant continûment toute la surface cylindrique ou tronconique desdites surfaces de contact le long de la direction de translation et sur toute sa périphérie.

En pratique également, la zone de soudure hélicoïdale ou en spirale ou la pluralité desdites zones de soudure circulaires s'étendent sur une longueur dans la direction longitudinale axiale des surfaces de contact de 30 à 100 mm.

Plus particulièrement encore, la tête de laser est disposée de manière à émettre un dit rayon laser dans une direction longitudinale desdits tubes en vis-à-vis d'un miroir, de préférence la direction axiale XX', de sorte que ledit rayon laser émis par la tête de laser se réfléchit sur la surface du miroir, la surface du miroir étant inclinée d'un angle β par rapport à l'axe longitudinal XX' desdits tubes, de préférence d'un angle β de 30 à 60°, de préférence 45°, et ledit miroir incliné est monté apte à pivoter (R) à 360° ainsi que ledit rayon laser réfléchi par le miroir en rotation (R) par rapport à l'axe longitudinal XX' desdits tubes.

Plus particulièrement, ladite tête de laser est disposée à l'extrémité de fibre(s) optique(s) dans un ombilical disposé dans la direction longitudinale XX' des tubes assurant la liaison entre la tête de laser et un dispositif laser, le dispositif laser étant disposé de préférence à l'extérieur desdits tubes et ledit ombilical traversant lesdits tubes.

On comprend que ladite inclinaison du miroir par rapport à l'axe longitudinal correspond à une rotation du miroir par rapport à un axe perpendiculaire à la direction longitudinale XX' desdits tubes.

Plus particulièrement, dans un premier mode de réalisation, ledit miroir est monté apte à être en outre déplacé en translation (T) longitudinale axiale XX' et on réalise un dit déplacement en translation dudit miroir en combinaison à une dite rotation (R) dudit miroir sur 360° par rapport au dit axe longitudinal XX' desdits tubes.

Plus particulièrement, on déplace ledit miroir en translation de manière continue concomitamment à une dite rotation (R) du miroir sur 360° par rapport au dit axe longitudinal XX' et on obtient notamment une zone de soudure continue hélicoïdale ou en forme de spirale de même axe longitudinal XX' que lesdites surfaces de contact cylindriques ou respectivement tronconiques desdits tubes se chevauchant.

Plus particulièrement encore, on déplace ledit miroir en translation pas à pas, ladite translation et une dite rotation (R) du miroir sur 360° par rapport à son axe longitudinal XX' étant réalisées successivement, ledit soudage laser étant réalisé seulement pendant une dite rotation (R) du miroir. On peut ainsi obtenir notamment une pluralité de zones de soudure circulaires formant des cercles coaxiaux parallèles selon le même axe longitudinal XX' que lesdites surfaces de contact de révolution desdits tubes se chevauchant, lesdites zones de soudure circulaires étant espacées pas à pas ou juxtaposées en continue.

En pratique, à titre illustratif, on déplace ledit miroir en translation continue à une vitesse de 1 à 5 mm/tour, de préférence 3 mm/tour, ou en translation pas à pas à raison de 1 à 5 mm/pas, de préférence 3 mm/pas. On peut découpler la vitesse de rotation et la translation pour contrôler la dépose d'énergie en 1 seule fois ou par couches déposées successivement de manière rapprochée dans le temps, de préférence avant refroidissement.

Plus particulièrement, dans un deuxième mode de réalisation, la surface dudit miroir est montée apte à être inclinée d'une inclinaison β variable par rapport à la direction longitudinale XX' desdits tubes et on fait varier l'angle β de ladite inclinaison de la surface du miroir par rapport à ladite direction longitudinale XX' en combinaison à une dite rotation (R) dudit miroir par rapport au dit axe longitudinal XX'.

Ce mode de réalisation permet de faire varier l'angle du rayon laser réfléchit par le miroir et formant le rayon laser incident arrivant sur la surface de ladite partie absorbante recevant ledit rayon laser. Et, le déplacement en inclinaison de la surface du miroir et la variation de l'angle du rayon laser qui en résulte provoquent le même effet que le déplacement en translation du miroir. Cette inclinaison peut également être réalisée pas à pas, c'est-à-dire de manière discontinue, ou de manière continue.

Dans une première variante, on réalise une variation de ladite inclinaison du miroir de manière continue et concomitamment une dite rotation (R) du miroir sur 360° par rapport à l'axe longitudinal XX' desdits tubes. Ainsi, on obtient notamment une dite zone de soudure en forme de spirale sur desdites surfaces de contact tronconiques ou hélicoïdale de même axe longitudinal XX' que lesdites surfaces de contact cylindriques de deux tubes se chevauchant.

Dans une autre variante, on réalise une variation de ladite inclinaison du miroir par déplacement angulaire pas à pas, ladite inclinaison du miroir et ladite rotation (R) du miroir sur 360° par rapport à son axe longitudinal XX' étant réalisées successivement, et ledit soudage laser étant réalisé seulement pendant une dite rotation (R) du miroir par rapport à son axe longitudinal XX'. On peut ainsi obtenir notamment une pluralité de zones de soudures circulaires côte à côte parallèles, selon le même axe longitudinal XX' que lesdites surfaces de contact de révolution desdits tubes se chevauchant, lesdites zones de soudure circulaires étant espacées pas à pas ou juxtaposées en continue.

En pratique, à titre illustratif, on déplace ledit miroir en inclinaison de manière continue à une vitesse de déplacement angulaire de 0,1 à 5° par tour, de préférence de 0,5° par tour, ou par déplacement angulaire pas à pas à raison de 0,1 à 5°/pas, de préférence 0,5°/pas.

Dans une variante de réalisation, de préférence pour des chemisage d'épaisseur d'au moins 10 mm, ledit tube de chemisage interne est obtenu par assemblage par soudage laser bout à bout, en alternance, de petites longueurs de premiers tubes de chemisage transparents et des grandes longueurs de deuxièmes tubes de chemisage absorbants, en envoyant contre les surfaces annulaires planes frontales d'extrémité desdits premiers et deuxièmes tubes de chemisage en contact bout à bout, depuis une tête de laser à l'intérieur de l'un au moins desdits tubes, un rayon laser incliné par rapport à l'axe longitudinal coaxial (XX') desdits tubes, lesdites surfaces annulaires planes frontales d'extrémité étant perpendiculaires à l'axe (XX') des deux premiers et deuxièmes tubes de chemisage, et on de préférence recouvre les petites longueurs de premiers tubes de chemisage transparents d'un revêtement de la couleur desdits deuxièmes tubes de chemisage absorbants.

On comprend que lesdites extrémités frontales droites forment des surfaces planes annulaires s'étendant dans une direction perpendiculaire à la direction longitudinale XX' des tubes et sont constituées par la tranche en section transversale droite desdites extrémités.

Plus particulièrement, ledit rayon laser est incliné par rapport à la perpendiculaire aux surfaces frontales de contact à souder entre elles, d'un angle de 30 à 60°, notamment 45°.

Plus particulièrement encore, pour assembler ce tube de chemisage par soudage laser, on réalise une variation de ladite inclinaison par déplacement angulaire pas à pas dudit miroir successivement à une dite rotation (R) dudit miroir sur 360° par rapport à l'axe longitudinal XX', ledit soudage laser étant réalisé pendant une dite rotation (R) du miroir sur 360° par rapport à l'axe longitudinal XX' desdits tubes pour réaliser une pluralité de zones de soudure circulaires sous forme de cercles concentriques.

Dans un autre mode de réalisation, pour assembler ce tube de chemisage, on réalise une dite inclinaison par déplacement angulaire continu du miroir concomitamment à une dite rotation (R) dudit miroir sur 360° par rapport à l'axe longitudinal XX' dudit miroir pour réaliser une zone de soudure continue de forme de spirale plane.

Plus particulièrement, dans une variante, on réalise une dite translation continue concomitamment à une dite rotation (R) du miroir sur 360° par rapport à l'axe longitudinal XX' desdits tubes, et on obtient une dite zone de soudure hélicoïdale sur desdites surfaces de contact cylindriques à spires de diamètres croissants sur desdites surfaces de contact tronconiques.

Plus particulièrement encore, dans une autre variante de réalisation, qu'on réalise une dite translation pas à pas ou une dite inclinaison par déplacement angulaire pas à pas dudit miroir par rapport à l'axe longitudinal XX' desdits tubes, ladite inclinaison étant réalisée successivement à une dite rotation (R) dudit miroir sur 360° par rapport à l'axe longitudinal XX' desdits tubes en effectuant un dit soudage laser pendant une dite rotation pour réaliser une pluralité de zones circulaires côte à côte, de même diamètre sur desdites surfaces de contact cylindriques ou de diamètres croissants sur desdites surfaces de contact tronconiques.

Plus particulièrement, les matériaux thermoplastiques transparents et absorbants desdits tubes à assembler par soudage laser sont par exemple du PE, PP ou PVDF et PEEK.

Ces matériaux sont obtenus translucides ou rendus translucides avec des agents clarifiants ou agents nucléants ou peuvent être rendus opaques et absorbants aux rayons lasers visibles avec des agents opacifiants, de préférence des charges minérales, notamment du noir de carbone. On peut, le cas échéant, adapter le taux de charge, notamment du noir de carbone, en fonction de la géométrie desdites parties à souder, notamment de l'épaisseur desdites parties à souder.

Plus particulièrement, ledit rayon laser émis est un rayon laser dont la couleur est dans le spectre du visible, de préférence du vert ou rouge.

Plus particulièrement encore, on réalise ledit soudage laser en envoyant un rayon d'énergie de 1 à 5 W/mm², de préférence de 2 à 3 W/mm².

Plus particulièrement encore, on réalise desdites rotations (R) du miroir sur 360° par rapport à l'axe longitudinal XX' desdits tubes à une vitesse entre 0 et 100Hz, de préférence de 0.1 à 10 Hz soit de 10 tour/secondes à 1 tour/10 secondes.

La qualité de la soudure dépendra essentiellement de l'énergie déposée par unité de surface. Ainsi on pourra passer 10 fois à 0,2 W/mm² ou une fois à 2 W/ mm² par exemple. En pratique, une bonne soudure est réalisée lorsqu'on a déposé une valeur de 1 à 3 W/mm² selon la densité de la matière plastique considérée.

L'application d'une pression lors du soudage est une option selon la qualité et la tolérance de fabrication du liner et du manchon.

Lorsque le diamètre du manchon est bien calibré par rapport au diamètre interne du chemisage avec un écart de moins de 0.25 mm, alors sans pression, le soudage se fait parfaitement sans pression. En effet la partie transparente du manchon qui est partiellement absorbante emmagasine de la chaleur du laser et de fait, le manchon par dilatation se plaque sur le chemisage opaque lequel n'a pas pu se dilater du fait de la conduite en acier qui lui sert de voûte.

En revanche, si le différentiel de diamètre entre diamètre externe du manchon vis-à-vis du diamètre interne du chemisage est de plus 1 mm d'écart entre les tubes, l'application d'une pression est requis pour que le soudage se fasse sur des parties en contact.

Dans un mode de réalisation préféré, on réalise un contrôle de la qualité de la soudure laser en envoyant sur ladite zone de soudure un rayon laser de contrôle, de préférence émis avec le même dispositif et dans les mêmes conditions de rotation, translation ou inclinaison que le rayon de soudage, et en analysant à l'aide de capteur, de préférence par mesure d'absorption, un rayon laser de contrôle réfléchi sur la zone de soudure, ledit rayon laser de contrôle présentant une énergie plus faible que ledit rayon laser de soudage, de préférence une énergie de 0.01 à0.05 W/mm², et de préférence ledit rayon laser de contrôle étant de fréquence identique à celui du rayon laser de soudage, de préférence encore une longueur d'onde supérieure à 950 nm (au-delà du visible).

Le rayon laser de contrôle de soudure suit le même trajet que le rayon laser de soudage, émis par la même fibre laser et même tête de laser et même miroir. Un récepteur comprenant des cellules photosensibles et capteur mesurant l'absorption aptes à analyser le rayon réfléchi et déterminer le taux d'absorption permet de visualiser les variations d'absorptions sans attendre que le manchon se soit refroidi.

En analysant la lumière laser réfléchie par imagerie on peut voir apparaître les zones non soudées car les zones soudées sur le chemisage opaque absorbent toute l'énergie envoyée et donc reste noire alors que les zones non soudées apparaissent en blanc car il y a réflexion sur la face non soudée du manchon.

Il est avantageux d'utiliser les mêmes longueurs d'onde pour réaliser la soudure pour contrôler la soudure afin d'obtenir des résultats équivalents en termes de pénétration dans le tube transparent (absorption équivalente).

La présente divulgation décrit également un dispositif utile pour la mise en œuvre d'une méthode selon l'invention, caractérisé en ce qu'il comprend un système mécanique supportant un miroir et une dite tête de laser relié à un ombilical, apte à s'adapter et être déplacé à l'intérieur desdits premier et deuxième tubes à assembler et comprenant :
- des moyens d'extension radiale forcée apte à s'appuyer contre la surface interne d'un desdits premier et deuxième tubes à assembler et créer une pression de contact au niveau de la zone desdites surfaces de contact à souder, et
- des moyens apte à déplacer en rotation (R) ledit miroir autour de l'axe longitudinal axial XX' desdits premier et deuxième tubes à souder, et
- des moyens pour déplacer en translation relative (T) ledit miroir par rapport au dit système mécanique, et/ou
- des moyens pour déplacer en inclinaison (β) la surface dudit miroir par rapport à l'axe XX' desdits premier et deuxième tubes coaxiaux à assembler dans lequel ledit système mécanique est inséré.

Ledit système mécanique supportant ledit miroir et lesdits moyens d'extension radiale, moyens de rotation et/ou moyens d'inclinaison du miroir, peut être un chariot motorisé ou apte à être déplacé dans ladite conduite ou un mandrin apte à être déplacé dans ladite conduite.

Plus particulièrement, le dispositif comprend un mandrin supportant une tête de laser ou un dispositif laser et un miroir incliné β, ledit mandrin étant apte à être disposé à l'intérieur de l'un desdits tubes avec un même axe longitudinal XX' que lesdits premier et deuxième tubes, ladite tête de laser et ledit miroir incliné étant disposés axialement à l'intérieur desdits premier et deuxième tubes, et ledit mandrin supportant au moins une paroi périphérique transparente expansible radialement par gonflage, formant ainsi une première chambre gonflable apte à appliquer une pression, de préférence une pression de 2 à 3 bars, contre lesdites surfaces de contact des deux premier et deuxième tubes à souder, ledit miroir étant placé à l'intérieur de ladite chambre gonflable, ledit mandrin supportant également un ombilical, comprenant au moins un conduit d'alimentation en air comprimé pour le gonflage de ladite première chambre gonflable et un conduit d'alimentation électrique d'un moteur apte à déplacer ledit miroir en rotation R ainsi qu'en dite translation relative T ou en dite inclinaison β.

On comprend que le dispositif est ainsi apte à réaliser un dit soudage laser en positionnant ladite chambre gonflable en vis-à-vis desdites surfaces de contact des deux tubes à souder et en gonflant ladite chambre gonflable de manière à ce que lesdites surfaces de contact à souder puissent être mises sous pression l'une contre l'autre et en faisant pivoter (R) ledit miroir autour de l'axe longitudinal XX' desdits tubes et dudit mandrin sur 360°, et en déplaçant le point d'incidence du rayon laser sur les surfaces de contact à souder dans la direction longitudinale XX' par translation relative (T) dudit miroir par rapport au dit mandrin ou par inclinaison variable (β) dudit miroir par rapport au dit axe longitudinal XX', ladite translation ou dite inclinaison étant apte à être combinée à ladite rotation (R) par rapport à l'axe XX' notamment pour réaliser au moins une zone de soudure circulaire ou une zone de soudure hélicoïdale ou en forme de spirale.

Plus particulièrement encore, ledit mandrin supporte un moteur apte à entrainer la rotation (R) dudit miroir sur 360° autour de l'axe longitudinal XX' du mandrin, à l'aide d'un système de roulement à billes et d'engrenage.

Plus particulièrement, ledit miroir est apte à être déplacé en translation ou inclinaison relative par rapport à l'axe longitudinal dudit mandrin par un mécanisme de vis sans fin asservi à ladite rotation (R) dudit miroir autour de l'axe longitudinal XX' dudit mandrin, ou par un ergot de déclenchement de dite translation ou déplacement angulaire pas à pas.

Plus particulièrement encore, dans un premier mode de réalisation, ledit miroir est apte à être déplacé en translation relative par rapport à l'axe longitudinal dudit mandrin par un mécanisme de vis sans fin asservi à ladite rotation (R) dudit miroir autour de l'axe longitudinal XX' dudit mandrin notamment pour réaliser une zone de soudure en forme de spirale ou hélicoïdale, ou par un ergot de déclenchement de translation pas à pas, notamment pour réaliser une pluralité de soudures circulaires côte à côte parallèles respectivement à chaque pas.

Plus particulièrement encore, dans un deuxième mode de réalisation, ledit miroir est apte à être déplacé en inclinaison (β) par rapport à l'axe longitudinal XX' dudit mandrin par un mécanisme de vis sans fin asservi à ladite rotation (R) dudit miroir autour de l'axe longitudinal XX' dudit mandrin notamment pour réaliser une zone de soudure en forme de spirale ou hélicoïdale, ou par un ergot de déclenchement de déplacement angulaire pas à pas notamment pour réaliser une pluralité de soudures circulaires côte à côte parallèles respectivement à chaque pas.

Plus particulièrement encore, ledit mandrin supporte en outre un dispositif de contrôle de soudure comprenant un capteur apte à analyser, de préférence par mesure d'absorption, un rayon laser de contrôle réfléchi sur la zone de soudure, ledit mandrin étant relié à un ombilical comprenant des fibres optiques et des conduites d'alimentation en électricité.

Plus particulièrement encore, ledit mandrin supporte en outre une deuxième chambre gonflable comprenant une paroi périphérique extensible radialement par gonflage, espacée de ladite première chambre gonflable dans la direction longitudinale XX' dudit mandrin.

Le procédé de mise en place et le procédé de mise en œuvre du manchon avec le dispositif sont facilités du fait que ladite deuxième chambre permet de :
- faciliter le guidage et permettre le déplacement longitudinal plus aisé du dispositif à l'intérieur d'une conduite et/ou d'un manchon, du fait que les deux dites première et deuxième chambres sont partiellement gonflées jusqu'à un diamètre légèrement inférieur à celui de la conduite ou respectivement du manchon, les deux chambres étant espacées dans la direction longitudinale de manière à venir buter sur la paroi de la conduite et du manchon et ainsi maintenir le mandrin dans la direction axiale de la conduite ou du manchon en dépit du contre poids que représente ledit dispositif de contrôle de soudure, et
- fixer le dispositif à l'intérieur dudit manchon, et ainsi stabiliser le mandrin par rapport au dit manchon pour ajuster sa position avant la réalisation dudit soudage laser, par gonflage maximal de ladite deuxième chambre gonflable celle-ci étant ainsi plaquée et solidarisée à la paroi interne du manchon, l'ajustement de position consistant à pré positionner ladite première chambre en vis à vis de ladite partie terminale de manchon à souder après gonflage de la première chambre, et
- stabiliser le dispositif par rapport au dit manchon par gonflage maximal des deux dites première et deuxième chambres ainsi plaquées et solidarisées à la paroi interne du manchon, pendant la réalisation dudit soudage laser et ensuite pendant la mise en œuvre mobile desdits moyens de contrôle de soudure.

De préférence, les deux dites première et deuxième chambres gonflables s'étendent sur une longueur L1 et respectivement L2 et sont espacées d'une distance d dans la direction longitudinale du mandrin telle que lorsqu'une dite première chambre gonflable est en expansion radiale de plaquage contre la partie terminale du manchon, notamment lorsque celle-ci est disposée contre la partie terminale du chemisage interne de la conduite pour réaliser le soudage laser, la deuxième chambre gonflable se trouve en vis à vis et peut venir se plaquer contre une partie de la paroi interne tubulaire dudit manchon.

La présente invention fournit aussi un procédé de mise en place d'un manchon tubulaire de jonction au niveau d'une extrémité d'un élément unitaire de conduite à chemisage interne en matériau thermoplastique pour fixer un dit manchon en partie terminale d'un dit chemisage, ledit manchon présentant à chaque extrémité une partie terminale de paroi tubulaire, de préférence d'épaisseur réduite par rapport à l'épaisseur de la partie courante adjacente de la paroi tubulaire dudit manchon, et on crée par chauffage par rayon laser une zone de soudure et contact étanche par fusion entre elles des matières constitutives de ladite partie terminale du manchon et respectivement de la partie terminale de dit chemisage en contact l'une avec l'autre, et parcourues par ledit rayon laser, à l'aide d'un dispositif de mise en place de manchon.

Plus particulièrement, on réalise les étapes suivantes, de préférence sur le pont d'un navire de pose ou à terre :
i.1) on positionne ledit dispositif de mise en place de manchon à l'intérieur dudit manchon de sorte qu'au moins une dite première chambre gonflable soit en position en vis-à-vis d'une première partie terminale du manchon, l'autre desdites première et deuxième chambres gonflables étant en vis à vis de la paroi interne de la partie courante du manchon et on gonfle au moins ladite deuxième chambre gonflable de manière à solidariser le dispositif de mise en place de manchon avec ledit manchon en plaquant la paroi expansible de ladite deuxième chambre contre la paroi interne dudit manchon tubulaire, et
i.2) on déplace l'ensemble ainsi formé du manchon et dudit dispositif de mise en place de manchon dans la direction longitudinale XX' axialement que l'on insère à l'intérieur d'une extrémité ouverte dépourvue de manchon d'un élément de conduite, jusqu'à ce que ladite première partie terminale du manchon soit en contact avec ladite partie terminale du chemisage de ladite extrémité femelle dudit élément de conduite, et
i.3) on gonfle ladite première chambre gonflable pour la plaquer contre la paroi interne de ladite première partie terminale de manchon, et
i.4) on envoie ledit rayon laser de soudage que l'on déplace en rotation et translation ou inclinaison, de préférence en exerçant simultanément une pression de ladite partie terminale de manchon contre ladite partie terminale de chemisage en contact l'une avec l'autre par gonflage de ladite première chambre gonflable pour réaliser une dite zone de soudure par laser des matières constitutives d'une partie de ladite partie terminale du manchon et respectivement une partie terminale de dit chemisage en contact l'une avec l'autre, et parcourues par ledit rayon laser, et
i.5) on contrôle la qualité de la soudure en envoyant un rayon laser de contrôle que l'on déplace en rotation et translation ou inclinaison, ledit rayon laser de contrôle étant de plus faible énergie que le rayon de soudage et on analyse le rayon réfléchi sur la zone de soudure, et
i.6) on dégonfle lesdites première et deuxième chambres et on déplace en translation ledit dispositif de mise en place de manchon pour l'évacuer.

On comprend que ledit élément de conduite obtenu se retrouve avec une partie de manchon du côté de la deuxième partie terminale libre à l'extérieur de l'élément de conduite correspondant à ladite extrémité mâle de l'étape a) du procédé de réalisation de conduite ci-après.

La présente divulgation décrit également un procédé de réalisation d'une conduite à l'aide d'un dispositif de mise en place de manchon , dans lequel on réalise l'assemblage d'éléments unitaires de conduite comprenant un dit chemisage, et un dit manchon tubulaire de jonction inséré et fixé à seulement une extrémité de chaque dit élément de conduite et dépassant de celle-ci, le dépassement dudit manchon définissant une extrémité mâle de chaque dit élément de conduite apte à être assemblée avec une extrémité dépourvue de dit manchon définissant une extrémité femelle d'un autre dit élément de conduite. On crée par chauffage par laser une zone de soudure et contact étanche par fusion entre elles des matières constitutives d'une dite partie terminale du manchon et respectivement partie terminale de dit chemisage en contact l'une avec l'autre, et parcourues par ledit rayon laser, en réalisant les étapes suivantes dans lesquelles :
a) on introduit un dispositif de mise en place de manchon à l'intérieur d'un dit élément unitaire de conduite de sorte que ladite première chambre gonflable soit disposée au niveau d'une partie terminale dudit manchon, et on fixe ledit dispositif de mise en place de manchon à l'intérieur dudit manchon par gonflage d'une dite deuxième chambre gonflable contre la paroi interne dudit manchon, et
b) avant ou après l'étape a), on introduit et insère en force la partie de manchon formant ladite extrémité mâle d'un élément de conduite dans l'extrémité femelle de l'autre élément de conduite, dans la direction longitudinale XX' axialement, jusqu'à ce que ladite partie terminale du manchon de la ladite extrémité mâle dudit élément de conduite terminal soit en contact avec ladite partie terminale du chemisage de ladite extrémité femelle dudit élément de conduite à assembler, et
c) on réalise le soudage périphérique externe des extrémités des deux éléments de conduite bout à bout par soudage métallique, et
d) on réalise le gonflage d'une dite première chambre gonflable au niveau de ladite partie terminale du manchon qui lui est en vis à vis, et on envoie un dit rayon laser, de préférence en exerçant simultanément une pression de ladite partie terminale de manchon contre ladite partie terminale de chemisage en contact l'une avec l'autre pour réaliser une dite zone de soudure par fusion au niveau d'une partie des surfaces de contact de chaque dite partie terminale du manchon et chaque dite partie terminale de chemisage en contact l'une avec l'autre et parcourues par le rayon laser, pour réaliser une dite zone de soudure et contact étanche par fusion, et
e) on contrôle la qualité de la soudure par analyse, de préférence par mesure d'absorption, d'un rayon laser de contrôle réfléchi sur la zone de soudure, et
f) on dégonfle lesdites première et deuxième chambres gonflables et on déplace en translation ledit dispositif de mise en place de manchon.

Plus particulièrement, on réalise les étapes suivantes dans lesquelles :
a.1) on descend dans une tour de pose de conduite d'un navire de pose un premier élément de conduite équipé d'un dit manchon à une de ses extrémités, jusqu'à proximité de l'extrémité de l'élément de conduite terminal supérieur de la conduite en cours d'assemblage partiellement immergée en bas de la tour, et
a.2) on descend un dit dispositif de mise en place de manchon avec lesdites première et deuxième chambres au moins partiellement dégonflées, que l'on solidarise à un dit manchon fixé à un desdits premier ou deuxième élément de conduite, par gonflage d'une dite deuxième chambre que l'on plaque contre la paroi interne du manchon dans sa partie courante, ladite première chambre étant disposée en vis-à-vis d'une partie terminale libre dudit manchon,
a.3) on gonfle la première chambre qui se plaque contre la partie terminale dudit manchon, et
b) après ou avant l'étape a.3), on réalise l'assemblage des deux éléments de conduite en introduisant et insérant en force la partie d'un manchon formant une dite extrémité mâle d'un élément de conduite dans l'extrémité femelle dépourvue de manchon de l'autre élément de conduite,
c) on réalise ledit soudage métallique des extrémités des deux éléments de conduite bout à bout, et
d) on envoie un dit rayon laser, en exerçant simultanément une pression de ladite partie terminale de manchon contre ladite partie terminale de chemisage en contact l'une avec l'autre par gonflage de ladite première chambre pour réaliser une dite zone de soudure par laser, et
e) on dégonfle la première chambre et on envoie un rayon laser de contrôle sur la zone de soudure.

Plus particulièrement encore, avant l'étape a), on réalise les étapes i.1) à i.6) du procédé de mise en place d'un manchon tubulaire de jonction au niveau d'une extrémité d'un élément unitaire de conduite selon l'invention, de préférence sur le pont du navire ou à terre, pour fixer un dit manchon en partie terminale d'un dit élément de conduite avant son assemblage avec un autre dit élément de conduite.

On entend ici par « interne » et « externe », interne et respectivement externe à la conduite, au manchon ou au chemisage selon les cas.

On comprend qu'on entend ici par « partie courante du manchon » la partie centrale du manchon située entre les deux parties terminales aux deux extrémités longitudinales du manchon.

Plus particulièrement, la conduite à réaliser est une conduite de liaison soit reposant sur le fond de la mer, soit une liaison fond/surface apte à être posée en milieu sous-marin, et lesdits éléments de conduite ont une longueur de 20 à 50 m, de diamètre interne de 10 à 60 cm et ledit manchon présente une longueur de 45 à 150cm. Il s'agit plus particulièrement de conduite d'injection d'eau sous pression dans des puits de champs pétroliers, laquelle pression est toujours supérieure à 5MPa et plus particulièrement de 25 à 70 MPa (250 à 700 bars). Ce type de conduite comme rappelé ci-dessus est particulièrement sollicitée au niveau desdites soudures métalliques de sorte que celles-ci doivent être protégées au maximum de toute corrosion par contact avec l'eau de mer, surtout dans le cas de liaisons fond-surface, car dans ce cas la conduite est perpétuellement en mouvements en raison des effets de la houle du vent et du courant s'exerçant sur le support flottant en surface et de ce fait soumise à des contraintes de fatigue extrêmes. De plus, les propriétés du fluide véhiculé, peuvent amener à devoir inclure des surépaisseurs d'acier sacrificiel important, ayant un impact fort sur l'installation de ces conduites. La mise en place d'un chemisage en plastique permet de supprimer ce besoin.

D'autres caractéristiques et avantages de la présente invention apparaîtront à la lumière de la description détaillée qui va suivre, en référence aux figures suivantes.
- La figure 1 est une coupe en vue de côté de l'assemblage d'une conduite selon l'invention, à l'aide d'un manchon tubulaire de jonction entre deux éléments de conduite ou longueurs unitaires de conduites chemisées selon l'invention avec des parties terminales tronconiques de manchon et chemisage.
- La figure 1A est une coupe en vue de côté de l'extrémité tronconique 2a du chemisage interne 2 d'un élément de conduite de la figure 1, schématisant les traces de zones de soudure 3 sur ladite surface de contact tronconique 2-1.
- La figure 2 est une coupe en vue de côté du manchon tubulaire de jonction présentant deux extrémités du type cylindrique.
- La figure 2A est une coupe en vue de côté d'une conduite en acier 10 équipée d'un chemisage interne 2 usiné selon un cylindre femelle d'axe XX' de rayon interne R₁ et recevant un manchon tubulaire selon la figure 2, usiné selon un cylindre mâle d'axe XX' de rayon externe sensiblement identique R₁.
- La figure 3 est une coupe en vue de côté d'un manchon tubulaire de jonction présentant deux extrémités frontales droites de type annulaire plane.
- La figure 3A est une coupe en vue de côté d'une conduite en acier équipée d'un chemisage interne usiné selon un plan perpendiculaire à l'axe XX' à une distance L2 de l'extrémité de ladite conduite, et recevant un manchon tubulaire selon la configuration de la figure 3.
- La figure 4 une coupe en vue de côté de l'assemblage d'une conduite selon l'invention, à l'aide d'un manchon tubulaire de jonction entre deux éléments de conduite ou longueurs unitaires de conduites chemisées selon l'invention, avec des parties terminales cylindriques de manchon et de chemisage se chevauchant de manière superposées.
- La figure 5 représente schématiquement un mode de réalisation desdits moyens de rotation R du miroir combiné aux moyens de translation relative dudit miroir dans un dispositif selon la figure 4.
- La figure 6A est une vue en coupe longitudinale au niveau de la jonction de deux tubes montrant le soudage laser avec un dispositif 20 de réalisation d'une méthode d'assemblage selon l'invention, impliquant une rotation d'un miroir incliné (β) autour de l'axe longitudinal XX' desdits tubes, combinée à une translation relative dudit miroir dans la direction coaxiale XX'.
- La figure 6B est une vue en coupe longitudinale au niveau de la jonction de deux tubes se chevauchant par contact au niveau de surface de contact tronconique d'extrémité montrant le soudage laser avec un dispositif 20 de réalisation d'une méthode d'assemblage selon l'invention, impliquant une rotation d'un miroir autour de l'axe longitudinal XX' desdits tubes, combinée à une inclinaison variable de la surface 4a du miroir d'un angle β variable.
- La figure 7 représente la réalisation d'un tube de chemisage par assemblage bout à bout de grandes longueurs de tubes de chemisage absorbants 2 et de petites longueurs de tubes de chemisage transparents 1.
- La figure 8 représente des détails du soudage laser au niveau de surfaces annulaires planes appliquées l'une contre l'autre bout à bout desdits tubes absorbants et tubes transparents.
- La figure 9 représente schématiquement un mode de réalisation dans lequel un tube transparent de manchon 1 est placé à l'intérieur d'un tube absorbant 2 de chemisage d'une conduite 10, montrant schématiquement une zone de soudure hélicoïdale 3h entre le tube transparent 1 et le tube absorbant 2, ledit soudage laser étant réalisé depuis l'intérieur du tube transparent 1.
- La figure 10 représente en vue de côté un navire d'installation équipé d'une tour de pose dite en "J".
- Les figures 11 à 15 représentent différentes étapes de mise en place et soudage laser du manchon 1 à une extrémité d'un élément de conduite avec un dispositif selon la présente invention représenté schématiquement.
- Les figures 16 à 22 représentent différentes étapes d'assemblage de deux éléments de conduite avec mise en place et soudure du manchon 1 à une extrémité d'un premier élément de conduite au niveau de l'extrémité dépourvue de manchon d'un deuxième élément de conduite avec un dispositif selon la présente invention représenté schématiquement.
- Les figures 23 et 24 montrent un dispositif 20 de mise en place de manchon comprenant deux chambres aptes à réaliser un soudage laser.

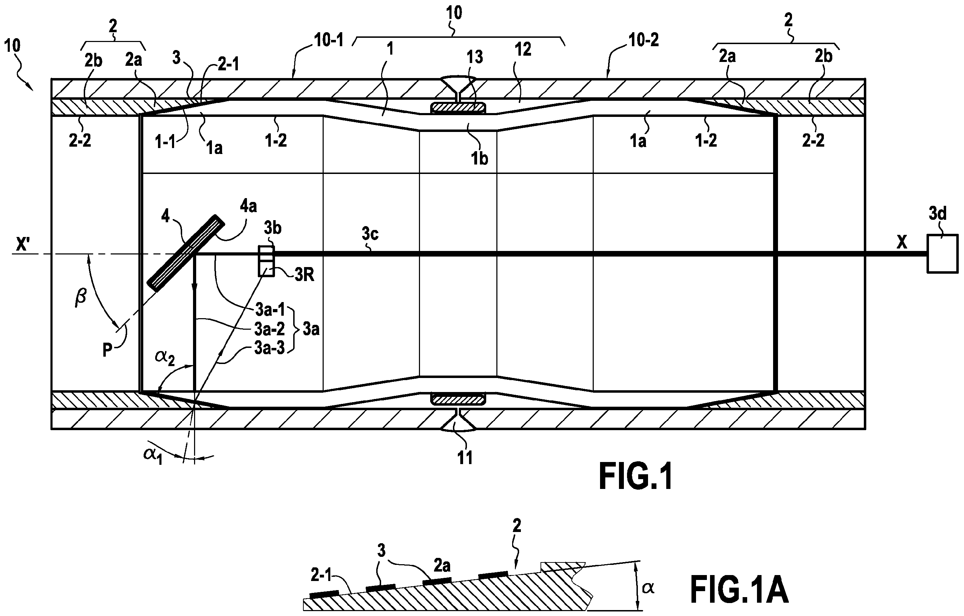

Sur la figure 1A, on a représenté une conduite 10 selon l'invention comprenant au moins 2 éléments de conduite 10₁, 10₂ à chemisage interne 2 en polyéthylène ou polypropylène assemblés bout à bout, dans laquelle les extrémités des deux éléments de conduite sont soudées 11 l'une à l'autre. Chaque élément de conduite comprend un chemisage interne en matériau thermoplastique 2 d'axe XX' coïncidant sensiblement avec l'axe des éléments de conduite 10₁, 10₂, présentant à chaque extrémité une partie terminale conique 2a de demi-angle au sommet α de 5 à 15°, notamment 10°, d'épaisseur réduite par rapport à l'épaisseur de la partie courante 2b dudit chemisage, définissant une forme concave avec une surface interne tronconique de révolution comprenant une surface de contact 2-1 de diamètre interne plus grand que celui de la partie courante 2b dudit chemisage et se terminant à une certaine distance L de chaque extrémité dudit élément de conduite. La surface externe de chaque dite partie terminale 2a du chemisage interne est éventuellement verrouillée par collage 2c de l'extrémité du chemisage au niveau ou à proximité de ladite partie terminale d'épaisseur réduite 2a du chemisage contre la surface interne correspondante de la paroi en acier de la conduite, à l'aide d'une colle, de préférence de type polyuréthanne ou époxy bi-composants.

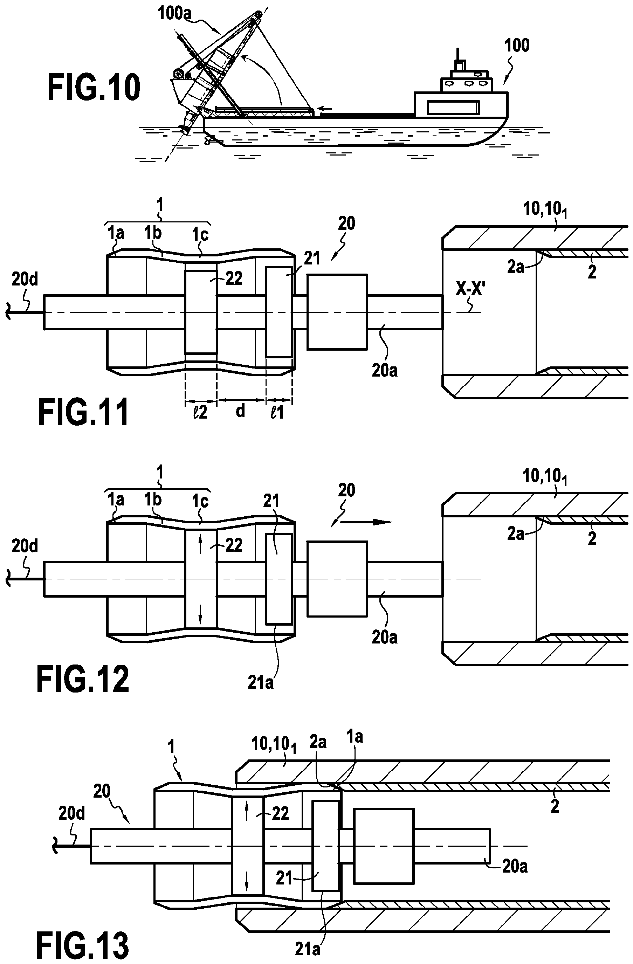

Un manchon tubulaire de jonction 1 en matériau thermoplastique, de préférence identique au matériau thermoplastique du chemisage interne 2, d'axe XX' coïncidant sensiblement avec l'axe des éléments de conduite 10₁, 10₂, de même diamètre externe, juste légèrement inférieur au diamètre interne de la conduite, est inséré à l'intérieur de chacune des extrémités bout à bout des deux éléments de conduite, de manière à chevaucher lesdites parties terminales des deux chemisages à l'aide d'un dispositif 20 comme décrit ci-après en référence aux figures 11 à 19.

Ledit manchon 1 présente à chaque extrémité longitudinale une partie terminale la transparente d'épaisseur réduite par rapport à l'épaisseur de la partie courante adjacente 1b dudit manchon, ladite partie terminale la du manchon définissant une forme convexe apte à chevaucher la partie terminale opaque d'épaisseur réduite dudit chemisage 2a avec laquelle elle est en contact. Ladite partie terminale la du manchon défini une surface externe tronconique 1-1 de diamètre externe inférieur à celui de la partie courante adjacente 1b du manchon, de même angle au sommet α que ladite surface interne tronconique de ladite partie terminale concave dudit chemisage. Les parties terminales du manchon de forme conique définissent une surface interne 1-2 cylindrique sensiblement de même diamètre interne que celui desdites partie courante 2b du chemisage et partie courante 1b du manchon.

Sur la figure 1, le manchon présente dans une partie centrale 1c, c'est-à-dire environ à mi- longueur dans sa direction longitudinale axiale XX', un diamètre externe réduit inférieur aux diamètres externes de ses parties courantes 1b adjacentes à ladite partie centrale 1c de manière à ménager un espace annulaire 12, et on place une pièce annulaire 13 de protection thermique du manchon lors du soudage des extrémités des éléments de conduite, lesdites parties courantes 1b du manchon présentant un diamètre externe sensiblement identique au diamètre interne des extrémités non recouvertes dudit chemisage des éléments de conduite assemblées.

La paroi tubulaire dudit manchon présente une épaisseur sensiblement constante dans sa partie centrale 1c et ses parties courantes adjacentes 1b, et sensiblement égale à l'épaisseur de la partie courante 2b dudit chemisage interne 2, et ladite partie centrale 1c du manchon est apte à se déformer pour adopter un diamètre interne sensiblement identique au diamètre interne du reste du manchon sous l'effet d'une pression interne du fluide circulant à l'intérieur de la conduite en opération d'au moins 1 MPa, et la pièce de protection thermique 13 est elle-même aussi déformable dans les mêmes conditions de pression interne à l'intérieur de la conduite pour adopter une épaisseur réduite, de préférence une épaisseur inférieure à 5 mm, de préférence encore inférieure à 2 mm, ladite pièce de protection thermique étant de préférence encore constituée de fibres de céramique sous une forme similaire à du coton hydrophile.

On comprend que :
- la partie centrale du manchon du fait de son épaisseur sensiblement constante, présente une réduction du diamètre externe ainsi que du diamètre interne lors de la pose, la conduite étant vide et à la pression atmosphérique et lorsqu'elle est soumise à des pressions correspondant à des valeurs de pression inférieures à 1 MPa (10 bars),
- dès que la pression interne excède 1 MPa (10 bars), les épaisseurs notamment de l'ordre de 3 à 10 mm et la rigidité du matériau plastique tel que du polyéthylène ou polypropylène permettent une augmentation des diamètres interne et externe de la partie centrale par déformation, par exemple lorsque circule à l'intérieur de la conduite et du manchon un fluide, notamment de l'eau sous pression, comme c'est le cas dans les conduites d'injection d'eau pour puits pétroliers supérieure à 5 MPa, notamment de 25 à 70 MPa.

Du fait que la pression P₀ à l'extérieur est très inférieure à la pression interne Pmax, cette dernière a pour effet de plaquer de manière énergique la partie centrale rétreinte 1c du manchon tubulaire de jonction 1 contre la paroi de la conduite acier, l'écran 13 en fibre céramique étant lui aussi écrasé et ne présentant alors qu'une épaisseur résiduelle de pas plus de 1 à 2 mm.

On pourra utiliser un dispositif laser tel que fabriqué et commercialisé par la société TRUMPF (FRANCE).

Sur la figure 1A, on a représenté schématiquement une pluralité de traces 3 de zones de soudure par laser qui peuvent correspondre à une pluralité de zones de soudures circulaires disposées côte à côte de manière discontinue et parallèle, lorsque l'on déplace pas à pas le miroir 4 en translation relative comme décrit ci-après ou qui peuvent correspondre à une zone de soudure continue en forme de spirale à spire de diamètres croissants.

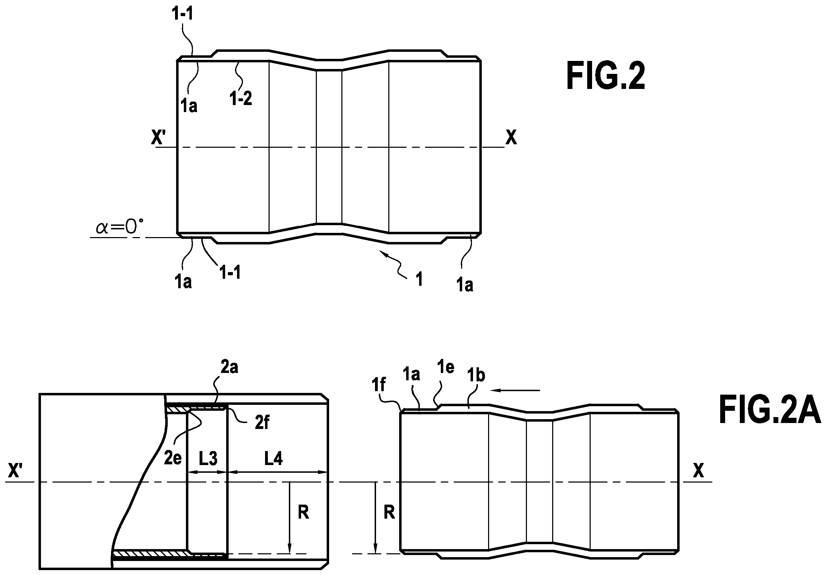

Sur les figures 2 et 2A, lesdites surface interne de la partie terminale d'épaisseur réduite 2a du chemisage et surface externe de la partie terminale d'épaisseur réduite la du manchon, en contact l'une contre l'autre sont de même forme cylindrique de même axe XX' que les dit manchon et dite conduite, l'extrémité de la partie terminale d'épaisseur réduite du manchon venant buter contre un épaulement 2e délimitant les surfaces internes desdites partie courante 2b et partie terminale d'épaisseur réduite 2a du chemisage.

Sur la figure 2A on a effectué un usinage du chemisage interne de forme cylindrique d'axe X'X et de rayon R sur une longueur L₃ et à une distance L₄ de l'extrémité de ladite conduite.

Dans ce mode de réalisation à surface de contact cylindrique, ledit manchon est inséré contre la partie terminale d'épaisseur réduite 2a du chemisage jusqu'à ce que l'extrémité 2f du chemisage vienne buter contre un épaulement le délimitant ladite partie courante 1b du manchon et ladite partie terminale de plus faible épaisseur la du manchon, et/ou ledit manchon est inséré contre la partie terminale d'épaisseur réduite 2a du chemisage jusqu'à ce que l'extrémité 1f du manchon vienne buter contre l'épaulement 2e délimitant la partie courante 2b et ladite partie terminale 2a d'épaisseur réduite du chemisage.

Pour mémoire et comme décrit dans WO 2006/042925, les partie terminales de chemisage sont réalisées en fin de processus d'insertion par « swagelining » et le cas échéant de collage, la chemise étant alors découpée à ras de l'élément de conduite acier, puis l'usinage est réalisé par une machine d'usinage installée sur la face de la première extrémité de l'élément de conduite.

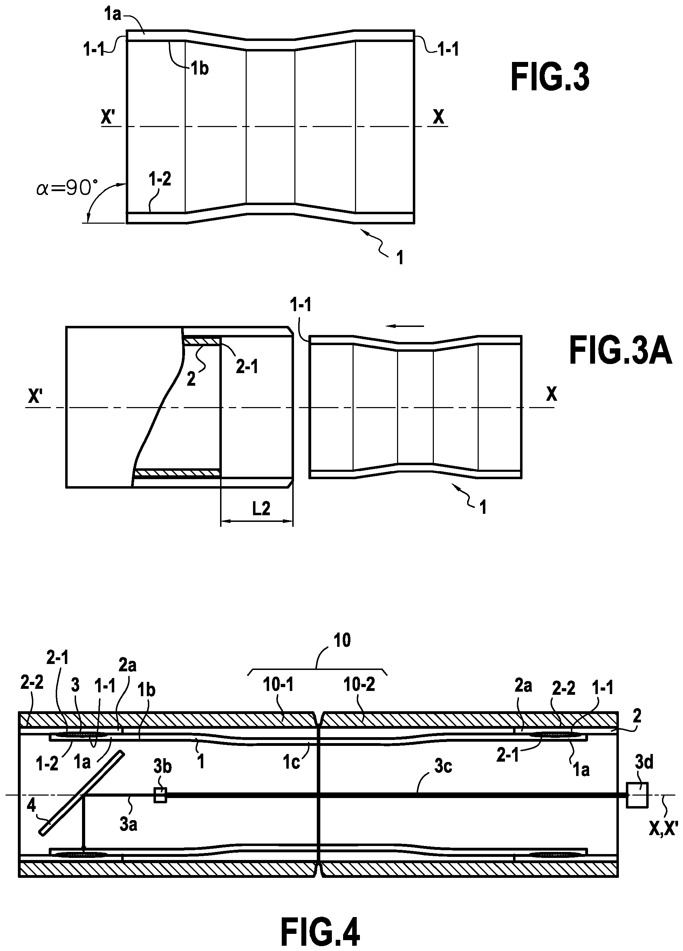

Sur la figure 3A on a effectué un usinage plan perpendiculaire à l'axe XX' situé à une distance L₂ de l'extrémité de ladite conduite.

Plusieurs modes d'assemblage entre les chemises internes et les manchons tubulaires de jonction sont possibles et présentent chacun un avantage vis-à-vis de l'épaisseur du chemisage interne 2. La valeur de l'angle α entre l'axe XX' et la génératrice de la surface de la partie terminale la du manchon en contact avec la partie terminale 2a de la chemise peut varier de 0 à 90°. Pour les modes de réalisation des figures 2 et 3, montrant une partie terminale la de forme convexe conique, la surface externe conique présente un demi-angle au sommet α compris entre 0 et 90°, le sommet du cône se trouvant sur la gauche de la figure.

Sur la figure 3, on a représenté une forme dite frontale : c'est en fait une forme équivalente à la forme conique, dans laquelle l'angle a' vaut 90°.

Sur la figure 2, on a représenté une forme cylindrique : c'est en fait une forme équivalente sous forme conique, dans laquelle l'angle au sommet α vaut 0°, le sommet du cône fictif se trouvent alors à l'infini.

Dans le cas de chemises de faible épaisseur, par exemple 3 à 5 mm, on utilisera avantageusement le mode conique des figures 1 et 1A avec un angle α compris entre 5° et 45°, de préférence 10°. Pour les moyennes épaisseurs, par exemple 6 à 12 mm, on utilisera avantageusement le mode cylindrique de la figure 2. Pour les fortes épaisseurs, par exemple 12 à 20 mm, on utilisera avantageusement le mode frontal de la section droite de la figure 3.

Dans le cas de préfabrication en atelier, les conditions opérationnelles sont nettement plus simples que sur site, et de plus le coût horaire du navire de pose n'intervient pas. On pourra donc être amené à préparer des manchons tubulaires de jonction et des rames avec des technologies d'assemblage différentes de celles utilisées sur site. A cet effet, sur la figure 3A, on a détaillé un manchon tubulaire de jonction de type mixte, possédant, sur la droite une extrémité de type frontal qui sera assemblée en atelier sur l'extrémité frontale correspondante d'une chemise interne de rame telle que décrite en référence à la figure 3A.

Sur la figure 1, on a représenté une partie seulement des moyens d'un dispositif d'assemblage par soudage laser comprenant un dispositif laser 3d disposé à l'extérieur des tubes 1, 2 et rejoignant par un ombilical 3c une tête de laser 3b supportée par un dispositif d'assemblage 20 (non représenté). Ladite tête de laser 3b émet un faisceau de rayon laser 3a-1 axial XX', celui-ci étant dévié par réflexion sur la surface 4a du miroir 4, inclinée d'un angle β de 45 ° par rapport à la direction axiale XX'. Le rayon 3a-2 réfléchi sur la surface 4a arrive sur les surfaces de contact tronconiques 1-1 et 2-1 incliné, ledit rayon étant incliné d'un angle α₂ de 90° - α par rapport aux dites surfaces 1-1 et 2-1 (et d'un angle α₁ = α par rapport à la perpendiculaire aux dites surfaces de contact 1-1 et 2-1).

Un rayon laser de contrôle 3a-3 réfléchi sur la zone de soudure est analysé par un récepteur 3r comprenant un capteur apte à mesurer la puissance absorbée de manière à vérifier la qualité de la soudure, lorsque, comme explicité précédemment, le rayon envoyé 3a-1,3a-2 est un rayon laser de contrôle de soudure de plus faible énergie que le rayon laser de soudage.

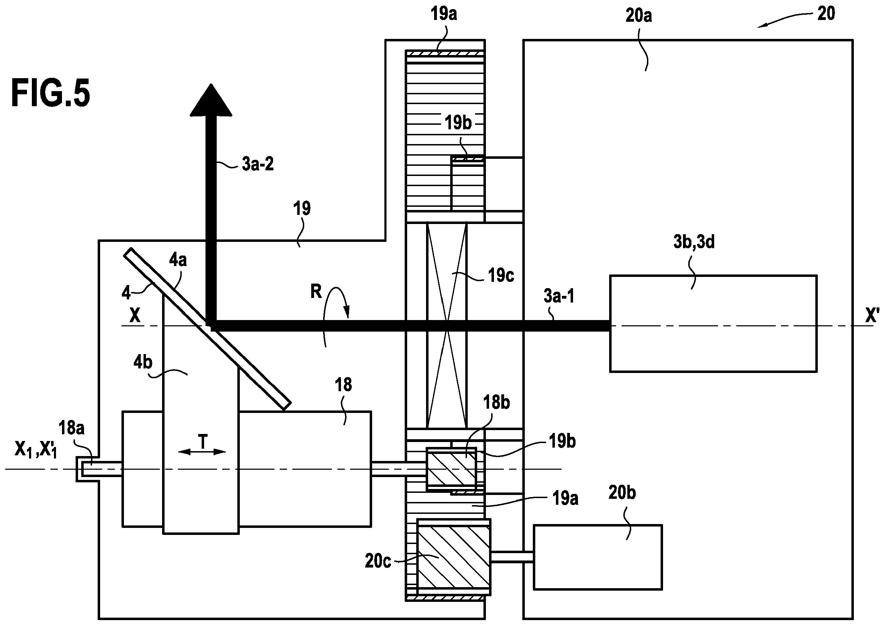

Sur la figure 5, on a représenté une partie d'un dispositif 20 d'assemblage par soudage laser, comprenant un mandrin 20a disposé dans un même axe longitudinal XX' que l'axe des tubes 1 et 2 à l'intérieur desquels il est inséré, le mandrin 20a supportant une tête de laser 3b disposée axialement, émettant un rayonnement laser 3a-1 dans la direction longitudinale XX'. Le mandrin 20a supporte à l'avant une première chambre gonflable 21, constituée de deux cerces fixes 21-b disposées transversalement par rapport à l'axe longitudinal XX' de ladite première chambre et desdits tubes, espacées l'une de l'autre dans la direction XX', les deux cerces étant reliées l'une à l'autre par une enveloppe souple transparente en silicone 21a. A l'intérieur de la chambre 21 se trouve positionné un miroir 4 dont la surface réfléchissante 4a est inclinée d'un angle β d'environ 45° de sorte que le rayonnement laser 3a-1 est dévié à 90° dans la direction transversale. Le rayon 3a-2 réfléchi sur le miroir arrive à un point d'incidence 3i au niveau de la surface de contact tronconique 2-1 de l'extrémité d'épaisseur réduite biseautée 2a du tube absorbant 2, après avoir traversé l'extrémité d'épaisseur réduite la du tube transparent 1. La chaleur de fusion de la surface de contact 2-1 se transmet par conduction thermique au niveau de la surface de contact 1-1 de manière localisée au niveau du contact d'interface avec les points d'impact 3i du rayonnement 3-2 sur la surface de contact 2-1.

Sur la figure 4, on a représenté un mode de réalisation dans lequel le chemisage interne et le manchon sont d'épaisseur faibles de pas plus de 5 mm avec des parties terminales non usinées de même épaisseur que les parties courantes adjacentes de chemisage et respectivement manchon. Les parties terminales de chemisage interne et de manchon sont superposées sans buter l'une contre l'autre avec des surfaces de contact 1-1 et 2-1 cylindriques réunies par une zone de soudure 3 continue cylindrique.

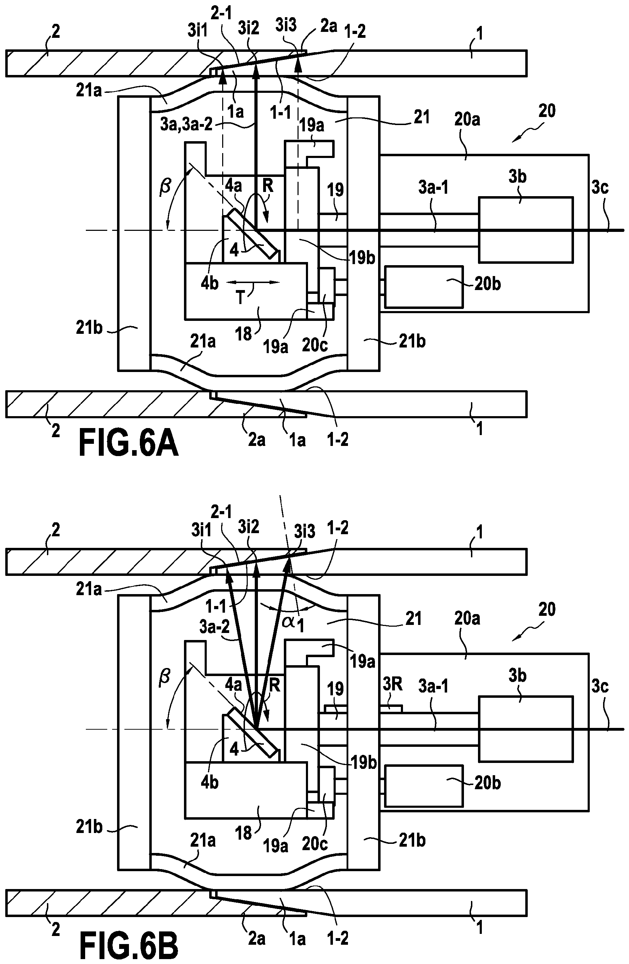

Sur la figure 6A sont représentés schématiquement des moyens de translation relative T du miroir à l'intérieur de la chambre 21 fixe. La chambre 21 est fixée par gonflage et application d'une pression au niveau des surfaces internes cylindriques 1-2 du tube 1 au niveau de la partie d'extrémité d'épaisseur réduite 1a. La translation T du miroir permet de déplacer le point d'incidence espacés 3i de 3i-1 à 3i-3 du rayon 3a-1 et créer la zone de soudure 3 au niveau des surfaces de contact tronconiques 2-1 et 1-1 comme représenté sur la figure 5.

Sur la figure 5, on a représenté plus en détail mais schématiquement, le moyen de rotation R du miroir 4 par rapport à l'axe longitudinal XX' des tubes et moyens de translation relative T du miroir par rapport au dispositif 20, lesquels sont inclus dans la chambre de gonflage transparente 21 non représentée sur la figure 5. Le mandrin 20a supporte un moteur 20b qui entraine en rotation un système d'engrenage entrainant la rotation R du miroir 4 autour de l'axe longitudinal XX'. Plus précisément, le moteur 20b entraine en rotation le pignon 20c, qui entraine en rotation une roue dentée 19a par rapport au même axe longitudinal XX', solidaire d'une structure tournante 19 comprenant ledit miroir et autorisant donc la rotation dudit miroir autour de l'axe XX' grâce à un système de roulement à billes 19c.

Sur la figure 5, on a indiqué que le mandrin 20a peut supporter soit la tête de laser 3b, soit directement un dispositif laser 3d.

D'autre part, sur la figure 5, on a représenté un mode de réalisation dans lequel la rotation R du miroir 4 par rapport à l'axe longitudinal XX' desdits tubes est combinée à une translation relative continue T dans une direction longitudinale à l'aide d'une vis sans fin 18 fonctionnant comme suit. La roue dentée 19a entraine en rotation selon le même axe longitudinal XX' une deuxième roue dentée 19b qui coopère avec un pignon 18b entrainant en rotation la vis sans fin 18 selon un axe longitudinal X₁X₁' par l'intermédiaire d'un arbre longitudinal 18a. La vis sans fin 18 coopère avec un support de miroir 4b de telle sorte que la rotation de la vis sans fin 18 autour de son axe X₁X'₁ entraine le déplacement en translation relative du support 4b du miroir 4. La translation du miroir 4 est donc assurée grâce à la vis sans fin 18 asservie à la rotation R, par exemple en raison de 3 mm/tour, un tour correspondant à un pas de vis d'une zone de soudure hélicoïdale 3h ainsi obtenue. On comprend que le pignon 18b et la vis sans fin 18 font partie de la structure tournante entrainée en rotation autour de l'axe XX' avec le support 4b et le miroir 4.

Dans un mode de réalisation alternatif (non représenté), on peut mettre en œuvre, au lieu d'une vis sans fin 18, un système de translation relative pas à pas et non en continu, de sorte que la rotation du pignon 18b déclenche un déplacement discontinu et qui permet d'obtenir des zones de soudure circulaires parallèles disposées côte à côte et espacées d'un pas de translation dans la direction longitudinale XX' au lieu d'une zone de soudure continue en forme de spirale ou hélicoïdale.

La mise en œuvre d'une translation continue ou pas à pas avec des pas de translation correspondant à la largeur de la zone de soudure créée par la largeur du rayon permet d'obtenir une zone de soudure 3 s'étendant sur une surface de révolution continue le long de la direction longitudinale de translation comme représenté figure 4.

Sur la figure 6B, on a représenté un mode de réalisation selon lequel, au lieu d'une translation relative T du miroir 4 à l'intérieur de la chambre de gonflage 21, on fait varier l'angle d'inclinaison β de la surface 4a du miroir 4, de sorte que le rayonnement réfléchi 3a-2 dévié par la surface 4a du miroir arrive sur les surfaces de contact 1-1 et 2-1 selon une inclinaison α₁ de 0° à 30°par rapport à la perpendiculaire aux dites surfaces de contact 1-1 et 2-1. Le point d'incidence 3i-1 correspond à une inclinaison α₁ de 0°, le point 3i-2 à une inclinaison α₁ de 10°, et le point 3i-3 à une inclinaison α₁ de 30°. Les moyens d'inclinaison relative du miroir 4a peuvent être asservis à la rotation R du miroir autour de l'axe XX' par des moyens équivalents impliquant la mise en œuvre d'un système d'engrenage et de vis sans fin 18. Par exemple, on mettra en œuvre une vis sans fin 18 engrenant sur un système d'engrenage à renvoi d'angle avec un pignon de sortie d'un axe perpendiculaire à l'axe de la vis sans fin 18 et qui coopère avec un pignon du support du miroir entrainant l'inclinaison du miroir asservie à la rotation du miroir autour de l'axe longitudinal XX' desdits tubes. La vis sans fin 18 peut être entrainée en rotation de la même manière que dans le mode de réalisation de la figure 5. On réalise par exemple une variation de l'inclinaison de l'angle β de la surface 4a du miroir par rapport à l'axe XX' de ± 5°, ladite variation d'inclinaison étant asservie à la rotation R du miroir, à raison de 0,5°/tour pour obtenir une zone de soudure en forme de spirale ou hélicoïdale 3h. Alternativement, on peut réaliser là encore une pluralité de zones de soudures circulaires parallèles côte à côte grâce à des variations d'inclinaison discontinues, obtenues par la mise en œuvre d'un système de ressort et came permettant d'actionner un ergot de déclenchement angulaire pas à pas de ladite inclinaison, par exemple 0,5°/pas.

Le procédé selon l'invention permet d'obtenir des zones de soudure en parfaite qualité et extrêmement résistante avec une largueur de soudure correspondant à la largeur du faisceau de laser de 2 à 3 mm dans l'axe XX', permettant de souder des épaisseurs de tubes jusqu'à 25 mm d'épaisseur, et plus particulièrement de 1 à 25 mm d'épaisseur. On peut ainsi réaliser une zone de soudure s'étendant dans la direction axiale par l'intermédiaire d'une zone hélicoïdale faite d'une pluralité de cercles discontinus côte à côte, espacés tous les 5 mm par exemple, et ensemble s'étendant sur une distance de 20 à 50 mm dans la direction de XX'.

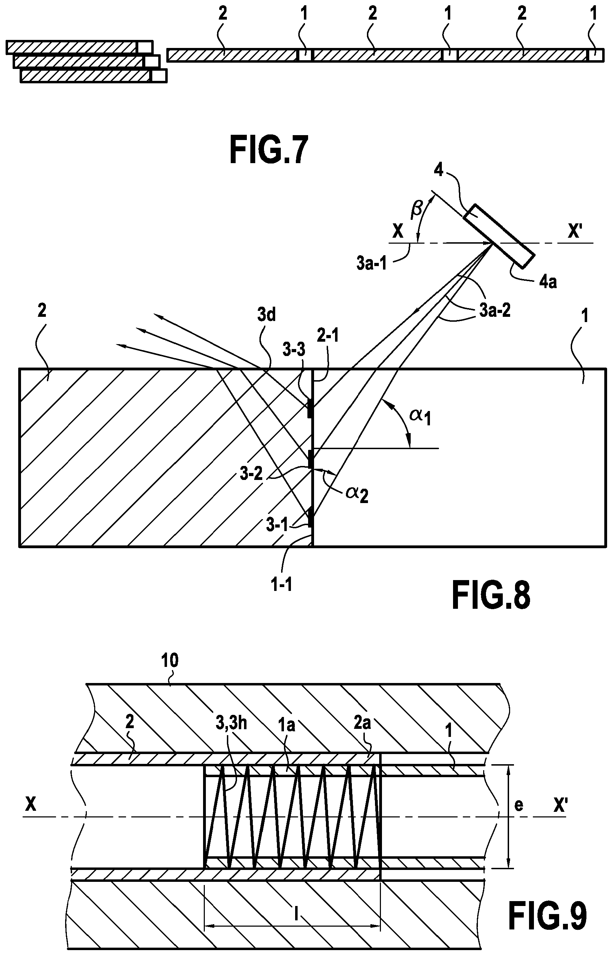

Sur la figure 7, on a représenté un exemple de réalisation d'assemblage de tubes absorbants 2 de grande longueur et tubes transparents 1 de petite longueur bout à bout au niveau de surfaces annulaires planes frontales d'extrémités s'étendant dans des plans perpendiculaires à leur axe longitudinal XX'.

Sur la figure 8, on a représenté un mode de réalisation d'une pluralité de zones de soudure circulaires concentriques 3-1, 3-2 et 3-3 par inclinaison d'un angle β variable de la surface 4a du miroir 4 par rapport à l'axe longitudinale XX' des tubes 1 et 2. La variation de l'angle β implique une variation des angles α₁ et α₂ du rayon incident 3a-2, α₁ par rapport à l'axe longitudinal XX' lui-même perpendiculaire aux surfaces de contact frontales planes 1-1 et 2-1, et α₂ par rapport aux surfaces de contact frontales planes 1-1 et 2-1 perpendiculaires à l'axe XX'. Du fait de la pluralité de zones de soudure circulaires 3-1, 3-2, 3-3, on réalise ainsi une soudure s'étendant sur 60-90% de l'épaisseur des tubes 1 et 2.

Sur la figure 9, on a représenté un mode de réalisation, dans lequel le tube transparent ou manchon 1 est placé à l'intérieur du tube absorbant opaque ou chemisage 2 d'une conduite 10 auquel il doit être assemblé par soudage laser au niveau de leurs extrémités ou parties terminales cylindriques 1a,2a non usinées d'épaisseur constante de préférence de pas plus de 5 mm, superposées et se chevauchant sur une distance I = 2 à 5 mm. Et, on a réalisé une zone de soudure continue hélicoïdale 3h à l'aide d'un dispositif d'un rayon laser tournant autour et par rapport à l'axe XX' à l'intérieur du tube transparent 1, de manière à ce que le rayon laser traverse d'abord la partie transparente intérieure avant de se réfléchir sur la partie absorbante externe. Dans ce mode de réalisation, la zone de soudure est à spires de diamètre constant car lesdites surfaces de contact sont cylindriques.

En revanche, dans un mode de réalisation, dans lequel les surfaces de contact 1-1 et 1-2 sont des surfaces de révolution tronconiques tel que représenté sur les figures 4 et 6, la zone de soudure est de forme en spirales avec des spires de diamètres croissants, depuis la spire passant par le point 3i-1 correspondant à la spire de plus petit diamètre, jusqu'au point 3i-3 correspondant à la spire de plus grand diamètre, les surfaces d'enveloppes desdites zones de soudure sont alors des surfaces tronconiques et non pas cylindriques.

Sur les figures 10 à 15, on représente les différentes étapes de mise en place d'un manchon tubulaire de jonction 1 au niveau d'une extrémité d'un élément de conduite 10₁ à l'aide d'un dispositif 20 de mise en place de manchon. Ces opérations peuvent être effectuées à terre ou sur le pont du navire 100 en position horizontale.

Un dispositif 20 de mise en place de manchon 1 est équipé sur les figures 11 à 15 d'un mandrin 20a de forme cylindrique s'étendant dans une direction longitudinale axiale XX' comprenant un orifice central cylindrique longitudinal au sein duquel est disposé un ombilical 20d lequel sert aussi de fil de manutention du dispositif 20.

Sur les figures 10 à 21, le dispositif 20 comprend une première chambre gonflable 21 à paroi transparente 21a, équipée de miroir 4 et moyens de rotation du miroir en translation et/ou inclinaison tel que décrit ci-dessus, ladite première chambre étant disposée dans la direction longitudinale XX' à une distance d d'une deuxième chambre gonflable 22.

Les première et deuxième chambres sont espacées d'une distance d de telle sorte que lorsque la deuxième chambre 22 est disposée en vis-à-vis de la partie centrale restreinte 1c du manchon, la première chambre 21 est disposée en vis-à-vis d'une extrémité du manchon au niveau de sa partie terminale d'épaisseur réduite 1a.

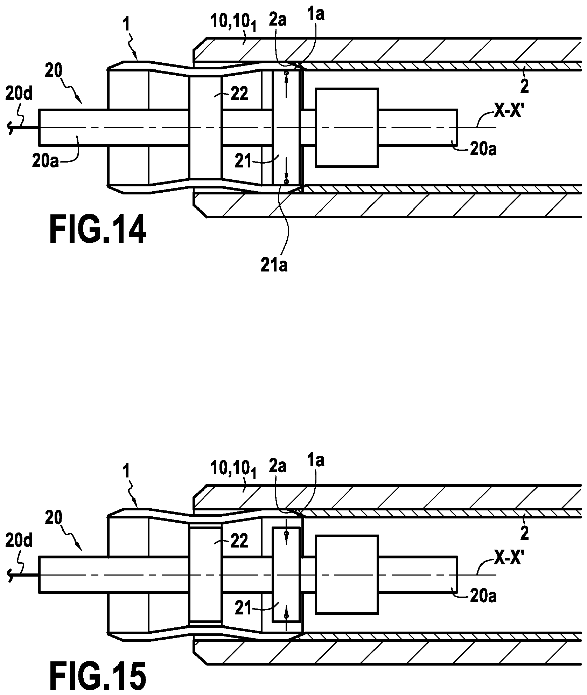

Sur les figures 11 et 12, on a inséré un dispositif de mise en place du manchon 20 de telle sorte que comme représenté sur la figure, lorsque l'on gonfle au maximum, la deuxième chambre gonflable 22, celle-ci vient se plaquer contre la paroi de la partie centrale restreinte 1b du manchon 1. L'ensemble du dispositif 20 et du manchon 1, est ainsi solidarisé et peut être déplacé en translation horizontale vers l'extrémité ouverte dépourvue de manchon d'un élément de conduite 10₁, jusqu'à venir buter contre l'extrémité 2a du chemisage 2 de l'élément de conduite 1₁ comme représenté sur la figure 13. A ce moment, comme représenté sur la figure 14, la paroi transparente 21a de la première chambre gonflable 21 est disposée en vis-à-vis des surfaces de contact tronconiques 1-1, 1-2 à une extrémité du manchon, comme représenté sur les figures 13 et 14. A ce stade, la première chambre gonflable 21 peut être gonflée de manière à venir se plaquer contre la partie terminale la du manchon en butée contre l'extrémité 2a du chemisage et on envoie le rayon laser 3a ce qui fait fondre la zone des surfaces de contact 1-1, 2-1 du manchon 1 et du chemisage 2, et ainsi permet de réaliser une soudure par laser par fusion de la zone du plan de contact entre le manchon tubulaire de jonction 1 au niveau de son extrémité la et l'extrémité 2a de la chemise 2 parcouru par le rayon de laser 3a comme décrit ci-dessus. La première chambre 21 est expansée avec une pression ce qui permet de garantir une excellence compacité dans le plan de fusion ainsi que l'absence de bulles d'air préjudiciable à une bonne étanchéité au niveau de la surface de fusion.

Ensuite, pour réaliser les étapes de contrôle de la qualité de la soudure, on dégonfle la première chambre 21 en position dégonflée laquelle reste relativement proche des parois du manchon et on envoie un rayon laser de contrôle sur la zone de soudure dont on analyse le rayon réfléchi sur la zone de soudure à l'aide d'un capteur 3r situé dans la première chambre.

Une fois le contrôle de soudure réalisé, on peut évacuer en translation le dispositif 20 après avoir au préalable dégonflé toutes les chambres gonflables. Lesdites première et deuxième chambres gonflables 21 et 22, en position dégonflées restent relativement proches des parois du manchon de sorte que le guidage du dispositif 20 en translation longitudinale à l'intérieur du manchon peut se faire aisément. Avantageusement, ce guidage peut être réalisé manuellement ou par un chariot ou autres moyens de guidage en translation longitudinale.

Ainsi, se trouve prêt à être posé un élément de conduite 10₁ équipé à une de ses extrémités d'un manchon tubulaire de jonction 1 formant une partie mâle prêt à être encastré dans la partie femelle dépourvue de manchon tubulaire de jonction d'un deuxième élément de conduite.

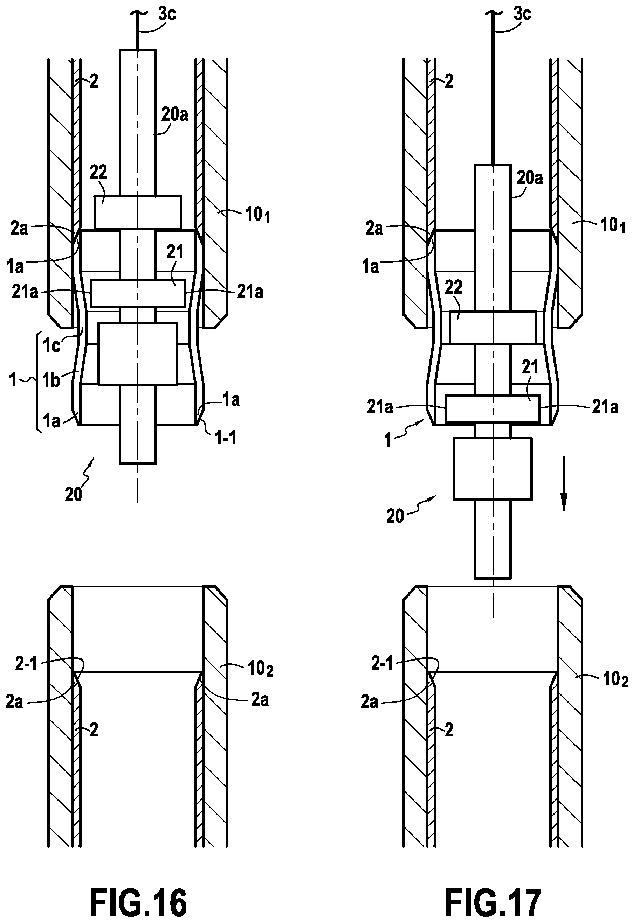

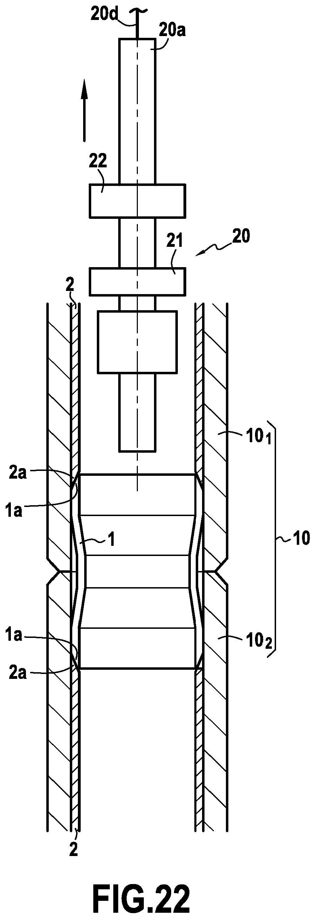

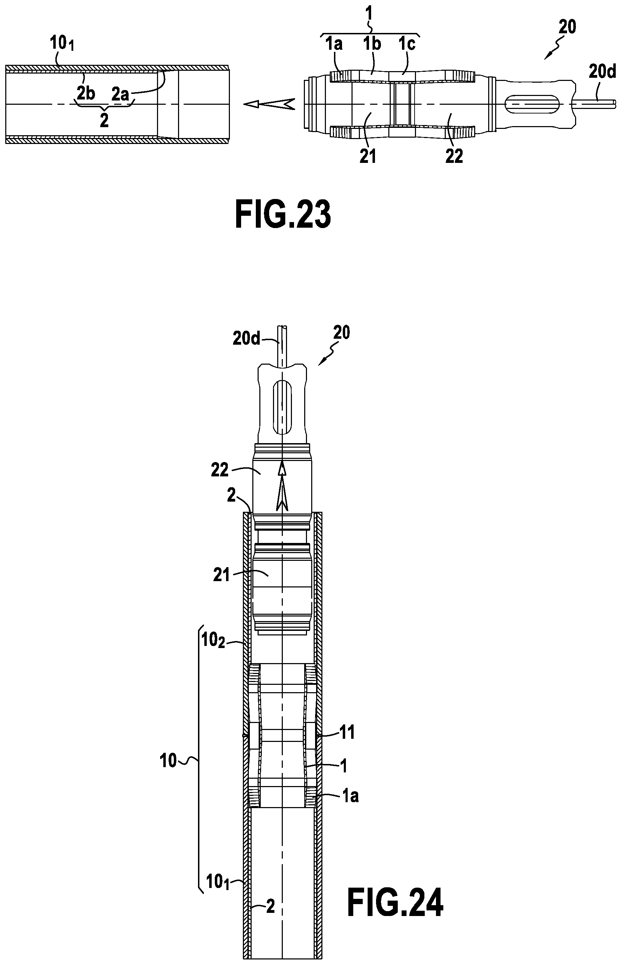

Sur les figures 16 à 22, on a représenté l'assemblage entre deux longueurs unitaires de conduite chemisée, lors de l'installation sur site qui est effectuée à bord d'un navire de pose 100 équipé d'une tour de pose en J 100a, tel que représenté sur la figure 10. Un nouvel élément de conduite 10₁ chemisé équipé d'un manchon tubulaire 1 à une de ses extrémités est transféré, de manière connue, de la position horizontale à la position oblique correspondant à l'inclinaison de la tour pour être ensuite positionné dans l'axe de l'élément de conduite terminal 10₂ de l'extrémité de la rame en cours de pose. Ledit élément de conduite à assembler 10₁ est ensuite déplacé axialement vers l'élément de conduite terminal 10₂ en suspension. Une partie de manchon 1 formant une extrémité mâle de l'un des deux éléments de conduite pénètre dans l'extrémité femelle dépourvue de manchon de l'autre élément de conduite à assembler, jusqu'à ce que la partie terminale la du manchon vienne en contact avec la partie terminale 2a de la chemise 2 à l'intérieur de l'autre élément de conduite 10₁. Les deux éléments de conduite étant proches de la verticale, un bras manipulateur permet à la partie terminale la du manchon de s'insérer complètement contre la partie terminale de la chemise pour atteindre la configuration de la figure 23 où les deux éléments de conduite 10₁, 10₂ sont maintenus à quelques mm de distance, par exemple grâce à ce même bras manipulateur non représenté, de manière à pouvoir effectuer, de manière connue, la soudure 11 au moyen d'un robot de soudage orbital connu de l'homme de l'art. Sur les figures, on a représenté les parois des conduites acier chanfreinées distantes de quelques mm en cours de soudage, l'écran 13 constitué d'un matelas en mousse céramique limite le transfert de chaleur et protège le manchon thermoplastique pendant toute la durée du processus de soudage. Et, en partie droite, on a représenté la soudure 11 terminée.

Dans un mode de réalisation représenté sur les figures 16 à 22, un nouvel élément de conduite terminal 10₁ est équipé d'un manchon tubulaire de jonction 1 à son extrémité inférieure formant ainsi une extrémité mâle descendue vers l'extrémité supérieure femelle d'un premier élément de conduite 10₁ dépourvue de manchon formant l'élément de conduite terminal supérieur d'un conduite en cours de pose maintenue fixement en suspension en pied de tour.

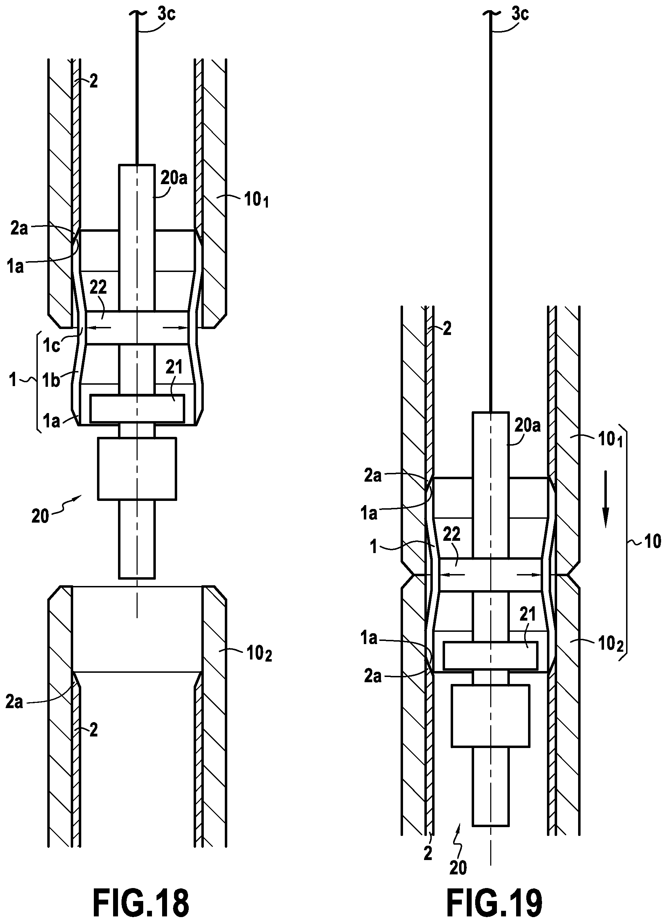

Dans une première étape, on descend par l'ombilical 20d le dispositif de mise en place de manchon 20 de sorte que la première chambre gonflable 21 soit positionnée en vis-à-vis de la partie terminale la de l'extrémité inférieure du manchon 1 et la partie terminale 1a. Ainsi, la deuxième chambre gonflable 22 se trouve en vis-à-vis de la partie centrale 1c du manchon 1, comme représenté figure 17. A ce moment, on gonfle la deuxième chambre 22 de manière à solidariser le dispositif 20 avec le manchon 1, le dispositif 20 étant maintenant descendu avec l'élément de conduite 10₁ jusqu'à encastrer l'extrémité mâle du manchon dépassant de l'extrémité de l'élément de conduite 10₁ à l'intérieur de la partie femelle non chemisée de l'élément de conduite 10₂, de sorte que la partie terminale la du manchon 1 viennent buter contre la partie terminale 2a du chemisage 2 de l'élément de conduite 10₂ comme représenté sur la figure 19.

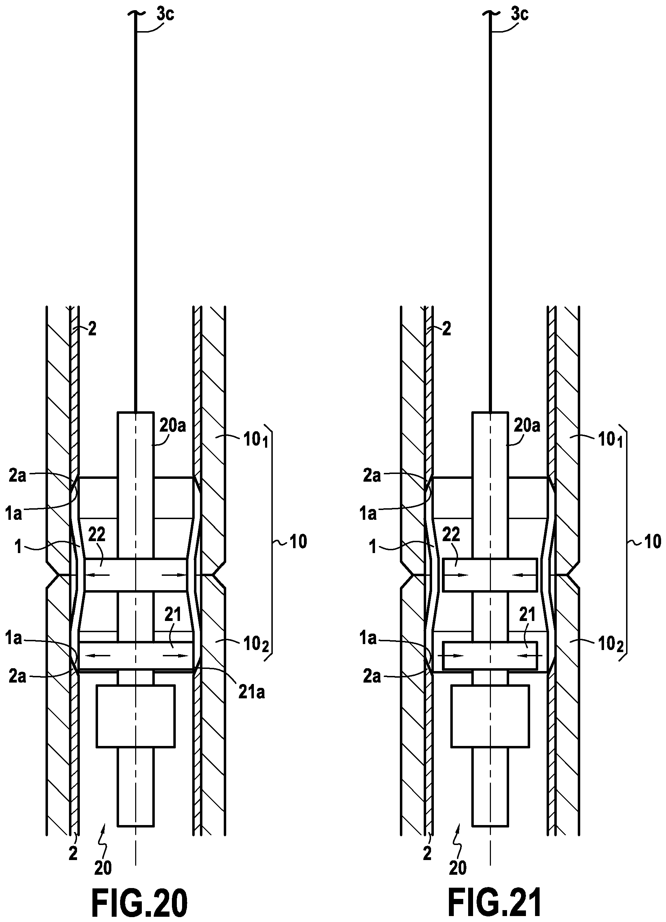

A ce stade, figure 20, pour réaliser la fusion par soudage laser, on gonfle la première chambre gonflable 21, et on envoie le rayonnement laser de manière à réaliser la fusion au niveau d'une zone de soudure 3 entre les partie terminale la du manchon 1 et partie terminale 2a du chemisage 2, la fibre optique étant acheminée dans un conduit à l'intérieur de l'ombilical 20d.

Ensuite, pour réaliser le contrôle de la soudure par contrôle par rayon laser de contrôle, on dégonfle partiellement les deux chambres 21 et 22. Ensuite, on peut dégonfler les différentes parois gonflables, 21, 22, et remonter le dispositif 20 pour une prochaine mise en œuvre par assemblage d'un nouvel élément de conduite.

Sur les figures 23 et 24, on a représenté un mode de réalisation dans lesquels les deux chambres 21 et 22 sont équipées de parois transparentes, placées de telles sortes qu'elles puissent être positionnées simultanément au regard des deux extrémités la d'un même manchon 1, l'ensemble des deux chambres 21 et 22 étant d'une longueur supérieure au manchon 1 de sorte que les deux chambres peuvent coïncider et se plaquer avec les deux extrémités la du manchon simultanément.

Alternativement, on peut descendre un nouvel élément de conduite 10₂ déjà équipé d'un manchon tubulaire de jonction 1 à son extrémité supérieure, mais dont l'extrémité inférieure dépourvue de manchon forme ainsi une extrémité femelle dudit nouvel élément de conduite descendue vers l'extrémité supérieure mâle d'un premier élément de conduite 10₁ équipée d'un manchon tubulaire de jonction 1 à son extrémité supérieure, ce premier élément de conduite 10₁ formant l'élément de conduite terminal supérieur d'une conduite en cours de pose maintenue fixement en suspension en pied de tour.

## Revendications

1. Méthode de réalisation de l'assemblage de tubes en matériaux thermoplastiques, dans laquelle on assemble au moins deux tubes (1, 2) disposés bout à bout ou se chevauchant au moins en partie coaxialement, dans laquelle on réalise ledit assemblage par soudage laser de deux surfaces de contact de révolution (1-1, 2-1) appliquées l'une contre l'autre de respectivement deux parties (1a, 2a) de deux tubes (1, 2), comprenant au moins :
- une partie terminale d'extrémité (la) d'un premier tube (1), transparente à la longueur d'onde du laser, et
- une partie terminale d'extrémité (2a) du deuxième tube (2), absorbante à la longueur d'onde du laser, et
ledit soudage étant réalisé à l'aide d'un rayon laser (3a, 3a-2) que l'on déplace en rotation (R) à 360° par rapport à l'axe longitudinal (XX') commun des premier et deuxième tubes (1,2), un dispositif laser (3d) ou une tête du dispositif laser (3b) émettant ledit rayon laser (3a), étant disposé ou disposée à l'intérieur de l'un desdits premier et deuxième tubes (1, 2) de telle sorte que ledit rayon laser (3a, 3a-2) traverse d'abord ladite partie terminale transparente (la) du premier tube (1) pour atteindre une zone de ladite surface de contact de révolution (2-1) de la partie terminale absorbante (2a) du deuxième tube (2) et, de préférence, on applique une pression sur lesdites surfaces de contact l'une contre l'autre, pour réaliser une zone de soudure (3) par fusion entre ladite surface de contact de révolution (1-1) de la partie transparente (la) du premier tube (1) et ladite partie terminale absorbante du deuxième tube,
et dans laquelle ledit premier tube est un manchon tubulaire de jonction (1) en matériau thermoplastique inséré à l'intérieur d'une conduite (10) comprenant au moins deux éléments de conduite en acier (10-1, 10-2), les deux éléments de conduite (10-1, 10-2) comprenant chacun un tube de chemisage interne en matériau plastique constituant chacun un dit deuxième tube (2), ledit manchon tubulaire de jonction (1) étant inséré au niveau de l'assemblage bout à bout des extrémités non chemisées des deux éléments de conduite soudées métalliquement ou destinées à être soudées métalliquement (11) l'une à l'autre, lesdites parties terminales du manchon et du chemisage étant en contact l'une avec l'autre, au niveau de surfaces de révolution externes desdites parties terminales du manchon en contact avec des surfaces de révolution internes desdits chemisages, lesdites surfaces de révolution desdites parties terminales du manchon et de chemisage présentant le même axe de révolution que ladite conduite et se chevauchant dans la direction axiale, et on réalise ledit soudage de préférence en appliquant une dite pression sur la surface interne (1-2) dudit manchon dans la direction radiale au niveau desdites surfaces de révolution en contact.

2. Méthode selon la revendication 1, **caractérisée en ce que** ledit chemisage interne (2) et ledit manchon (1) présentent une épaisseur inférieure ou égale à 5 mm, de préférence de 3 à 5 mm.

3. Méthode selon la revendication 1 ou 2, **caractérisée en ce que** :
- ledit chemisage interne (2) présente à au moins une extrémité une partie terminale (2a) de même épaisseur (2a) que l'épaisseur de la partie courante (2b) dudit chemisage, définissant une surface interne cylindrique correspondant à une dite surface de contact (2-1), de même diamètre interne que celui de la surface interne de la partie courante (2b) dudit chemisage, et
- ledit manchon présente à au moins une extrémité une partie terminale (la) de même épaisseur que l'épaisseur de la partie courante adjacente (1b) dudit manchon, ladite partie terminale (la) du manchon définissant :
- une surface externe cylindrique correspondant à une dite surface de contact de révolution (1-1), de diamètre externe sensiblement identique à celui de la surface interne dudit chemisage et
- une surface interne (1-2) cylindrique de diamètre interne inférieur à celui de la surface interne dudit chemisage,
- ladite partie terminale (la) du manchon étant ainsi apte à chevaucher de manière superposée la partie terminale dudit chemisage (2a) avec laquelle elle est en contact, et
- on réalise le soudage par laser de ladite surface interne cylindrique constituant une dite surface de contact (2-1) dudit chemisage et de ladite surface externe cylindrique constituant une dite surface de contact (1-1) dudit manchon.

4. Méthode selon l'une des revendications 1 ou 2, **caractérisée en ce que** :
- ledit chemisage interne (2) présente à au moins une extrémité une partie terminale d'épaisseur réduite (2a) par rapport à l'épaisseur de la partie courante (2b) dudit chemisage, définissant une forme concave avec une surface interne formant une dite surface de contact de révolution (2-1), de préférence tronconique ou cylindrique, de diamètre interne plus grand que celui de la surface interne de la partie courante (2b) dudit chemisage, et
- ledit manchon présente à au moins une extrémité une partie terminale (1a) d'épaisseur réduite par rapport à l'épaisseur de la partie courante adjacente (1b) dudit manchon, ladite partie terminale (1a) du manchon définissant une forme convexe apte à chevaucher et buter contre la partie terminale concave d'épaisseur réduite dudit chemisage (2a) avec laquelle elle est en contact, ladite partie terminale (1a) du manchon définissant une surface externe correspondant à une dite surface de contact de révolution (1-1), de préférence tronconique ou cylindrique, de diamètre externe inférieur à celui de la partie courante adjacente (1b) du manchon et une surface interne (1-2) cylindrique sensiblement de même diamètre interne que celui des partie courante (2b) du chemisage et partie courante (1b) du manchon, et
- on réalise le soudage par laser de ladite surface interne de révolution constituant une dite surface de contact (2-1) dudit chemisage et de ladite surface externe de révolution constituant une dite surface de contact (1-1) dudit manchon.

5. Méthode selon l'une des revendications 1 à 4, **caractérisée en ce qu'**on réalise une zone de soudure (3) continue de forme de spirale ou hélicoïdale (3h) ou une pluralité de zones de soudure circulaires concentriques ou disposées côte à côte parallèlement (3-1, 3-2, 3-3) le long de la direction axiale desdites surfaces de contact (1-1, 2-1).

6. Méthode selon l'une des revendications 1 à 5, **caractérisée en ce que** la tête de laser (3b) est disposée de manière à émettre un dit rayon laser dans une direction longitudinale desdits premier et deuxième tubes (1, 2) en vis-à-vis d'un miroir (4), de préférence la direction axiale (XX'), de sorte que ledit rayon laser (3a-1) émis par la tête de laser (3b) se réfléchit (3a-2) sur la surface (4a) du miroir (4), la surface (4a) du miroir (4) étant inclinée d'un angle (β) par rapport à l'axe longitudinal (XX') desdits tubes, de préférence d'un angle (β) de 30 à 60°, de préférence 45°, et ledit miroir incliné est monté apte à pivoter (R) à 360° ainsi que ledit rayon laser réfléchi (3a-2) par le miroir en rotation (R) par rapport à l'axe longitudinal (XX') desdits tubes.

7. Méthode selon la revendication 6, **caractérisée en ce que** ledit miroir est monté apte à être en outre déplacé en translation (T) longitudinale axiale (XX') et on réalise un dit déplacement en translation dudit miroir en combinaison à une dite rotation (R) dudit miroir sur 360° par rapport au dit axe longitudinal (XX') desdits tubes.

8. Méthode selon l'une des revendications 6 ou 7, **caractérisée en ce que** la surface (4a) dudit miroir (4) est montée apte à être inclinée selon une inclinaison (β) variable par rapport à la direction longitudinale (XX') desdits tubes (1, 2) et on fait varier l'angle (β) de ladite inclinaison de la surface (4a) du miroir (4) par rapport à ladite direction longitudinale (XX') en combinaison à une dite rotation (R) dudit miroir (4) par rapport au dit axe longitudinal (XX').

9. Méthode selon l'une des revendications 1 à 8, **caractérisée en ce que** ledit tube de chemisage interne est obtenu par assemblage par soudage laser bout à bout, en alternance, de petites longueurs de premiers tubes de chemisage transparents (1) et des grandes longueurs de deuxièmes tubes de chemisage absorbants (2), en envoyant contre les surfaces annulaires planes frontales d'extrémité (1-1, 2-1) desdits premiers et deuxièmes tubes de chemisage en contact bout à bout, depuis une tête de laser à l'intérieur de l'un au moins desdits tubes, un rayon laser (3a) incliné par rapport à l'axe longitudinal coaxial (XX') desdits tubes, lesdites surfaces annulaires planes frontales d'extrémité (1-1, 2-1) étant perpendiculaires à l'axe (XX') des deux premiers et deuxièmes tubes de chemisage, et de préférence recouvre les petites longueurs de premiers tubes de chemisage transparents d'un revêtement de la couleur desdits deuxièmes tubes de chemisage absorbants.

10. Méthode selon les revendications 8 et 9, **caractérisée en ce qu'**on réalise une variation de ladite inclinaison par déplacement angulaire pas à pas dudit miroir successivement à une dite rotation (R) dudit miroir sur 360° par rapport à l'axe longitudinal (XX'), ledit soudage laser étant réalisé pendant une dite rotation (R) du miroir sur 360° par rapport à l'axe longitudinal (XX') desdits tubes pour réaliser une pluralité de zones de soudure circulaires sous forme de cercles concentriques (3-1, 3-2, 3-3).

11. Méthode selon l'une des revendications 1 à 8, **caractérisée en ce qu'**on assemble par soudage laser des parties d'extrémités transparentes et des parties d'extrémités absorbantes de premier et deuxième tubes coaxiaux (1, 2), lesdites parties d'extrémités transparentes et respectivement absorbantes des deux tubes se chevauchant au niveau de dites surfaces de contact de révolution (1-1, 2-1) par rapport à l'axe longitudinal (XX') desdits tubes coaxiaux et on envoie, depuis une tête de laser à l'intérieur de l'un au moins desdits tubes, un rayon laser (3a, 3a-2) sur lesdites surfaces de contact, ledit rayon laser étant perpendiculaire aux dites surfaces de contact ou incliné (α₁), de préférence dans une fourchette de 0 à 30°, par rapport à la perpendiculaire aux dites surfaces de contact (1-1, 1-2).

12. Méthode selon la revendication 11, **caractérisée en ce que** lesdites surfaces de contact de révolution (1-1, 1-2) desdits premier et deuxième tubes (1, 2) à souder se chevauchant sont de forme cylindrique ou tronconique de même axe que l'axe longitudinal (XX') desdits tubes.

13. Méthode selon la revendication 11 et l'une des revendications 7 ou 8, **caractérisée en ce qu'**on réalise une dite translation continue ou dite inclinaison continue concomitamment à une dite rotation (R) du miroir sur 360° par rapport à l'axe longitudinal (XX') desdits tubes, et on obtient une dite zone de soudure hélicoïdale sur desdites surfaces de contact (1-1, 2-1) cylindriques ou une dite zone de soudure en forme de spirale à spires de diamètres croissants sur desdites surfaces de contact tronconiques.

14. Méthode selon la revendication 13, **caractérisée en ce qu'**on réalise une dite translation pas à pas ou une dite inclinaison par déplacement angulaire pas à pas dudit miroir par rapport à l'axe longitudinal (XX') desdits tubes, ladite inclinaison étant réalisée successivement à une dite rotation (R) dudit miroir sur 360° par rapport à l'axe longitudinal (XX') desdits tubes en effectuant un dit soudage laser pendant une dite rotation pour réaliser une pluralité de zones circulaires (3-1, 3-2, 3-3) côte à côte, de même diamètre sur desdites surfaces de contact cylindriques (1-1, 2-1) ou de diamètres croissants sur desdites surfaces de contact tronconiques (1-1, 2-1).

15. Méthode selon l'une des revendications 1 à 14, **caractérisée en ce qu'**on réalise ledit soudage laser en envoyant un rayon d'énergie de 1 à 5 W/mm², de préférence de 2 à 3 W/mm².

16. Méthode selon l'une des revendications 6 à 15, **caractérisée en ce qu'**on réalise desdites rotations (R) du miroir sur 360° par rapport à l'axe longitudinal (XX') desdits tubes à une vitesse de 10 tour/secondes à 1tour/10 secondes.

17. Méthode selon l'une des revendications 1 à 16, **caractérisée en ce qu'**on réalise un contrôle de la qualité de la soudure laser en envoyant sur ladite zone de soudure un rayon laser de contrôle, de préférence émis avec le même dispositif (3b, 3d) et dans les mêmes conditions de rotation, translation ou inclinaison que le rayon de soudage, et en analysant à l'aide de capteur (3r), de préférence par mesure d'absorption, un rayon laser de contrôle réfléchi sur la zone de soudure, ledit rayon laser de contrôle présentant une énergie plus faible que ledit rayon laser de soudage, de préférence une énergie de 0.01 à 0.05 W/mm², et de préférence ledit rayon laser de contrôle étant de fréquence identique à celui du rayon laser de soudage.

## Patentansprüche

1. Verfahren zur Herstellung einer Verbindung von Rohren aus thermoplastischen Materialien, bei der mindestens zwei Rohre (1, 2), die aneinanderstoßend angeordnet sind oder sich zumindest teilweise koaxial überlappen, zusammengefügt werden, wobei die genannte Verbindung durch Laserschweißen von zwei Rotationskontaktflächen (1-1, 2-1) hergestellt wird, die gegeneinander von jeweiligen zwei Teilen (1a, 2a) zweier Rohre (1, 2) angelegt werden, mindestens umfassend:
- einen Endabschnitt (1a) eines ersten Rohres(1), der für die Laserwellenlänge transparent ist, und
- einen Endabschnitt (2a) des zweiten Rohrs (2), der bei der Laserwellenlänge absorbiert, und
wobei die Verschweißung mittels eines Laserstrahls (3a, 3a-2) durchgeführt wird, der um 360° bezüglich der gemeinsamen Längsachse (XX') des ersten und des zweiten Rohrs (1, 2) in Rotation (R) versetzt wird, wobei eine Laservorrichtung (3d) oder ein Laservorrichtungskopf (3b), der den Laserstrahl (3a) aussendet, im Inneren des ersten oder des zweiten Rohrs (1, 2) so angeordnet ist oder angeordnet wird, dass der Laserstrahl (3a, 3a-2) zuerst durch den transparenten Endabschnitt (1a) des ersten Rohrs (1) hindurchgeht, um eine Zone der Rotationskontaktfläche (2-1) des absorbierenden Endabschnitts (2a) des zweiten Rohrs (2) zu erreichen, und wobei vorzugsweise Druck auf die Kontaktflächen gegeneinander ausgeübt wird, um eine Schweißzone (3) durch Fusion zwischen der Rotationskontaktfläche (1-1) des transparenten Abschnitts (1a) des ersten Rohrs (1) und dem absorbierenden Endabschnitt des zweiten Rohrs zu erzeugen,
und wobei das erste Rohr eine rohrförmige Verbindungshülse (1) aus thermoplastischem Material ist, die in ein Rohr (10) eingesetzt ist, das mindestens zwei Stahlrohrelemente (10-1, 10-2) umfasst, wobei beide Rohrelemente (10-1, 10-2) jeweils ein inneres Auskleidungsrohr aus Kunststoffmaterial aufweisen, das jeweils ein zweites Rohr (2) bildet, wobei die rohrförmige Verbindungshülse (1) an der Stoßverbindung der nicht ausgekleideten Enden der beiden Rohrelemente, die miteinander metallisch verschweißt (11) sind oder metallisch verschweißt werden sollen, eingesetzt wird, wobei die Hülsen- und Auskleidungsendabschnitte miteinander an äußeren Rotationsflächen der Hülsenendabschnitte in Kontakt sind, die mit inneren Rotationsflächen der Auskleidungen in Kontakt sind, wobei die Rotationsflächen der Hülsen- und Auskleidungsendabschnitte die gleiche Rotationsachse wie das Rohr haben und sich in axialer Richtung überlappen, und wobei das Schweißen vorzugsweise durch Aufbringen eines besagten Drucks auf die Innenfläche (1-2) der Hülse in radialer Richtung an den sich berührenden Rotationsflächen durchgeführt wird.

2. Verfahren nach Anspruch 1, **dadurch gekennzeichnet, dass** die innere Auskleidung (2) und die Hülse (1) eine Dicke von weniger als oder gleich 5 mm, vorzugsweise 3 bis 5 mm, aufweisen.

3. Verfahren nach Anspruch 1 oder 2, **dadurch gekennzeichnet, dass**:
- die Innenauskleidung (2) an mindestens einem Ende einen Endabschnitt (2a) mit der gleichen Dicke (2a) wie die Dicke des Fließabschnitts (2b) der Auskleidung aufweist, der eine zylindrische Innenfläche definiert, die einer besagten Kontaktfläche (2-1) entspricht, mit dem gleichen Innendurchmesser wie der der Innenfläche des Fließabschnitts (2b) der Auskleidung, und
- die Hülse an mindestens einem Ende einen Anschlussabschnitt (1a) mit der gleichen Dicke wie die Dicke des benachbarten Fließabschnittes (1b) der Hülse aufweist, wobei der Anschlussabschnitt (1a) der Hülse definiert:
- eine zylindrische Außenfläche, die der genannten Rotationskontaktfläche (1-1) entspricht, mit einem Außendurchmesser, der im Wesentlichen identisch mit dem der Innenfläche der Auskleidung ist, und
- eine zylindrische Innenfläche (1-2) mit einem Innendurchmesser, der kleiner ist als der der Innenfläche der genannten Auskleidung,
- wobei der Endabschnitt (1a) der Hülse dadurch in der Lage ist, den Endabschnitt der Auskleidung (2a), mit dem er in Kontakt steht, in überlagernder Weise zu überlappen, und
- wobei das Laserschweißen von der zylindrischen Innenfläche, die eine der Kontaktflächen (2-1) der Auskleidung bildet, und von der zylindrischen Außenfläche, die eine der Kontaktflächen (1-1) der Hülse bildet, durchgeführt wird.

4. Verfahren nach einem der Ansprüche 1 oder 2, **dadurch gekennzeichnet, dass**:
- die Innenauskleidung (2) an mindestens einem Ende einen Endabschnitt (2a) mit einer in Bezug auf die Dicke des Fließabschnitts (2b) der Auskleidung reduzierten Dicke aufweist, der eine konkave Form mit einer Innenfläche definiert, die eine der genannten Rotationskontaktflächen (2-1) bildet, vorzugsweise kegelstumpfförmig oder zylindrisch, mit einem Innendurchmesser, der größer ist als der der Innenfläche des Fließabschnitts (2b) der Auskleidung, und
- die Hülse an mindestens einem Ende einen Endabschnitt (1a) mit verringerter Dicke in Bezug auf die Dicke des angrenzenden Fließabschnitts (1b) der Hülse aufweist, wobei der Endabschnitt (1a) der Hülse eine konvexe Form definiert, die in der Lage ist, den konkaven Endabschnitt mit verringerter Dicke der Auskleidung (2a), mit dem sie in Kontakt steht, zu überlappen und gegen diesen anzuliegen, wobei der Endabschnitt (1a) der Hülse eine der Rotationskontaktfläche (1-1) entsprechende, vorzugsweise kegelstumpfförmige oder zylindrische Außenfläche mit einem Außendurchmesser, der kleiner als der des benachbarten Fließabschnitts (1b) der Hülse ist, und eine zylindrische Innenfläche (1-2) mit im wesentlichen dem gleichen Innendurchmesser wie dem des Fließabschnitts (2b) der Auskleidung und des Fließabschnitts (1b) der Hülse definiert, und
- das Laserschweißen von der inneren Rotationsfläche, die die Kontaktfläche (2-1) des Liners bildet, und von der äußeren Rotationsfläche, die die Kontaktfläche (1-1) der Hülse bildet, durchgeführt wird.

5. Verfahren nach einem der Ansprüche 1 bis 4, **dadurch gekennzeichnet, dass** eine kontinuierliche spiralförmige oder schraubenlinienförmige (3h) Schweißzone (3) oder eine Vielzahl von konzentrischen oder parallelen nebeneinanderliegenden kreisförmigen Schweißzonen (3-1, 3-2, 3-3) entlang der axialen Richtung der Kontaktflächen (1-1, 2-1) erzeugt werden.

6. Verfahren nach einem der Ansprüche 1 bis 5, **dadurch gekennzeichnet, dass** der Laserkopf (3b) so angeordnet ist, dass er den Laserstrahl in einer Längsrichtung des ersten und zweiten Rohres (1, 2) gegenüber einem Spiegel (4), vorzugsweise in axialer Richtung (XX'), emittiert, so dass der vom Laserkopf (3b) emittierte Laserstrahl (3a-1) an der Oberfläche (4a) des Spiegels (4) reflektiert wird (3a-2), wobei die Oberfläche (4a) des Spiegels (4) unter einem Winkel (β) in Bezug auf die Längsachse (XX') der Rohre geneigt ist, vorzugsweise unter einem Winkel (β) von 30 bis 60°, vorzugsweise 45°, und der geneigte Spiegel so angebracht ist, dass er um 360° drehbar (R) ist und der Laserstrahl (3a-2) von dem in Rotation (R) versetzten Spiegel in Bezug auf die Längsachse (XX') der Rohre reflektiert wird.

7. Verfahren nach Anspruch 6, **dadurch gekennzeichnet, dass** der Spiegel so angebracht ist, dass er zusätzlich in axialer Längsverschiebung (XX') (T) verschoben werden kann, und dass diese Verschiebung des Spiegels in Kombination mit einer Rotation (R) des Spiegels um 360° in Bezug auf die Längsachse (XX') der Rohre durchgeführt wird.

8. Verfahren nach einem der Ansprüche 6 oder 7, **dadurch gekennzeichnet, dass** die Oberfläche (4a) des Spiegels (4) so angebracht wird, dass sie mit einer variablen Neigung (β) in Bezug auf die Längsrichtung (XX') der Rohre (1, 2) geneigt werden kann, und dass der Winkel (β) der Neigung der Oberfläche (4a) des Spiegels (4) in Bezug auf die Längsrichtung (XX') in Kombination mit der Rotation (R) des Spiegels (4) in Bezug auf die Längsachse (XX') variiert wird.

9. Verfahren nach einem der Ansprüche 1 bis 8, **dadurch gekennzeichnet, dass** das innere Auskleidungsrohr durch abwechselndes Verbinden kurzer Längen erster transparenter Auskleidungsrohre (1) und langer Längen zweiter absorbierender Auskleidungsrohre (2) durch Laserstumpfschweißen erhalten wird, indem gegen die ringförmigen ebenen Stirnflächen (1-1, 2-1) der ersten und zweiten Auskleidungsrohre, die gegeneinander anliegen, ausgehend von einem Laserkopf im Inneren mindestens eines der Rohre ein Laserstrahl (3a) gesandt wird, der bezüglich der koaxialen Längsachse (XX') der Röhren geneigt ist, wobei die ringförmigen ebenen Stirnflächen (1-1, 2-1) senkrecht zur Achse (XX') der ersten und zweiten Auskleidungsrohre stehen und wobei vorzugsweise die kurzen Längen der ersten transparenten Auskleidungsrohre mit einer Beschichtung in der Farbe der zweiten absorbierenden Auskleidungsröhren bedecken.

10. Verfahren nach den Ansprüchen 8 und 9, **dadurch gekennzeichnet, dass** eine Veränderung der Neigung durch schrittweise Winkelverschiebung des Spiegels nach einer Rotation (R) des Spiegels um 360° in Bezug auf die Längsachse (XX') durchgeführt wird, wobei das Laserschweißen während einer Rotation (R) des Spiegels um 360° in Bezug auf die Längsachse (XX') der Rohre durchgeführt wird, um eine Vielzahl von kreisförmigen Schweißzonen in Form konzentrischer Kreise (3-1, 3-2, 3-3) zu erzeugen.

11. Verfahren nach einem der Ansprüche 1 bis 8, **dadurch gekennzeichnet, dass** transparente Endabschnitte und absorbierende Endabschnitte von ersten und zweiten koaxialen Rohren (1, 2) durch Laserschweißen miteinander verbunden werden, wobei sich die transparenten und jeweils absorbierenden Endabschnitte der beiden Rohre an den Rotationskontaktflächen (1-1, 2-1) in Bezug auf die Längsachse (XX') der koaxialen Rohre überlappen und ein Laserstrahl (3a, 3a-2) von einem Laserkopf im Inneren mindestens eines der Rohre auf die Kontaktflächen gesendet wird, wobei der Laserstrahl senkrecht zu den Kontaktflächen oder geneigt (α₁), vorzugsweise im Bereich von 0 bis 30°, in Bezug auf die Senkrechte zu den Kontaktflächen (1-1, 1-2) ist.

12. Verfahren nach Anspruch 11, **dadurch gekennzeichnet, dass** die Rotationskontaktflächen (1-1, 1-2) der ersten und zweiten zu verschweißenden Rohre (1, 2), die einander überlappen, eine zylindrische oder kegelstumpfförmige Form mit derselben Achse wie die Längsachse (XX') der Rohre haben.

13. Verfahren nach Anspruch 11 und einem der Ansprüche 7 oder 8, **dadurch gekennzeichnet, dass** man gleichzeitig mit der Rotation (R) des Spiegels um 360° bezüglich der Längsachse (XX') der Rohre eine fortgesetzte Verschiebung oder eine kontinuierliche Neigung durchführt und auf den zylindrischen Kontaktflächen (1-1, 2-1) eine spiralförmige Schweißzone oder auf den kegelstumpfförmigen Kontaktflächen eine spiralförmige Schweißzone mit Windungen zunehmenden Durchmessers erhält.

14. Verfahren nach Anspruch 13, **dadurch gekennzeichnet, dass** die Verschiebung schrittweise oder die Neigung durch eine schrittweise Winkelverschiebung des Spiegels in Bezug auf die Längsachse (XX') der Rohre erfolgt, wobei die Neigung sukzessive zu einer derartigen Rotation (R) des Spiegels über 360° in Bezug auf die Längsachse (XX') der Rohre durchgeführt wird, indem während der Rotation eine Laserschweißung durchgeführt wird, um eine Vielzahl von nebeneinander liegenden ringförmigen Zonen (3-1, 3-2, 3-3) zu erzeugen, die auf den zylindrischen Kontaktflächen (1-1, 2-1) den gleichen Durchmesser oder auf den kegelstumpfförmigen Kontaktflächen (1-1, 2-1) zunehmende Durchmesser aufweisen.

15. Verfahren nach einem der Ansprüche 1 bis 14, **dadurch gekennzeichnet, dass** das Laserschweißen durch Senden eines Energiestrahls von 1 bis 5 W/mm², vorzugsweise 2 bis 3 W/mm², durchgeführt wird.

16. Verfahren nach einem der Ansprüche 6 bis 15, **dadurch gekennzeichnet, dass** die Rotationen (R) des Spiegels über 360° in Bezug auf die Längsachse (XX') der Rohre mit einer Geschwindigkeit von 10 Umdrehungen/Sekunde bis 1 Umdrehung/10 Sekunden durchgeführt werden.

17. Verfahren nach einem der Ansprüche 1 bis 16, **dadurch gekennzeichnet, dass** eine Qualitätskontrolle der Laserschweißung durchgeführt wird, indem auf den Schweißbereich ein Kontroll-Laserstrahl gesendet wird, der vorzugsweise mit der gleichen Vorrichtung (3b, 3d) und unter den gleichen Bedingungen des Rotierens, Verschiebens oder Neigens wie der Schweißstrahl emittiert wird, und durch Analyse mit Hilfe von Sensoren (3r), vorzugsweise durch Absorptionsmessung, eines an der Schweißstelle reflektierten Kontroll-Laserstrahls, wobei der Kontroll-Laserstrahl eine geringere Energie als der Schweißlaserstrahl hat, vorzugsweise eine Energie von 0,01 bis 0,05 W/mm², wobei der Kontroll-Laserstrahl vorzugsweise die gleiche Frequenz wie der Schweißlaserstrahl hat.

## Claims

1. A method of assembling together tubes made of thermoplastic materials, wherein at least two tubes (1, 2) arranged end-to-end or overlapping coaxially at least in part are assembled together, wherein said assembly is performed by laser welding two contact surfaces of revolution (1-1, 2-1) pressed one against the other belonging respectively to two portions (1a, 2a) of two tubes (1, 2) and comprising at least:
- a terminal end portion (1a) of a first tube (1) that is transparent to the wavelength of the laser, and
- a terminal end portion (2a) of the second tube (2), that is absorbent to the wavelength of the laser, and
said welding being performed by using a laser beam (3a, 3a-2) that is moved in rotation (R) through 360° relative to the common longitudinal axis (XX') of the first and second tubes (1, 2), a laser device (3d), or a head of the laser device (3b), emitting said laser beam (3a) being arranged inside one of said first and second tubes (1, 2) in such a manner that said laser beam (3a, 3a-2) passes firstly through said transparent terminal portion (1a) of the first tube (1) in order to reach a zone of said contact surface of revolution (2-1) of the absorbent terminal portion (2a) of the second tube (2), and said contact surfaces are preferably pressed one against the other in order to make a weld zone (3) by fusion between said contact surface of revolution (1-1) of the transparent portion (1a) of the first tube (1) and said absorbent terminal portion of the second tube,
and wherein said first tube is a tubular junction sleeve (1) of thermoplastic material inserted inside a pipe (10) comprising at least two steel pipe elements (10-1, 10-2), each of the two pipe elements (10-1, 10-2) including an internal liner tube of plastics material, each constituting a said second tube (2), said tubular junction sleeve (1) being inserted at the level of the end-to-end assembly between the non-lined ends of the two pipe elements that are, or that are to be, metal welded together (11), said terminal portions of the sleeve and of the liners being in contact with one another at outer surfaces of revolution of said terminal portions of the sleeve in contact with inner surfaces of revolution of said liners, said surfaces of revolution of said terminal portions of the sleeve and of the liners presenting the same axis of revolution as said pipe and overlapping in the axial direction, and said welding is performed preferably while applying a said pressure to the inner surface (1-2) of said sleeve in the radial direction at said contacting surfaces of revolution.

2. A method according to claim 1, **characterized in that** said internal liner (2) and said sleeve (1) present thickness that is less than or equal to 5 mm, preferably in the range 3 to 5 mm.

3. A method according to claim 1 or 2, **characterized in that**:
- said internal liner (2) presents at at least one end a terminal portion (2a) having the same thickness (2a) as the thickness of the main portion (2b) of said liner, defining a cylindrical inner surface corresponding to a said contact surface (2-1) having the same inside diameter as the diameter of the inner surface of the main portion (2b) of said liner, and
- said sleeve presents at at least one end a terminal portion (1a) of the same thickness as the thickness of the adjacent main portion (1b) of said sleeve, said terminal portion (1a) of the sleeve defining:
- a cylindrical outer surface corresponding to a said contact surface of revolution (1-1), of outside diameter substantially identical to the diameter of the inner surface of said liner and
- a cylindrical inner surface (1-2) of inside diameter less than the diameter of the inner surface of said liner,
- said terminal portion (1a) of the sleeve thus being suitable for overlapping in superposed manner the terminal portion of said liner (2a) with which it is in contact, and
- said cylindrical inner surface constituting a said contact surface (2-1) of said liner is laser welded to said cylindrical outer surface constituting a said contact surface (1-1) of said sleeve.

4. A method according to claim 1 or 2, **characterized in that**:
- said internal liner (2) presents at at least one end a terminal portion (2a) of thickness that is reduced compared with the thickness of the main portion (2b) of said liner, defining a concave shape with an inner surface forming a said contact surface of revolution (2-1), which is preferably frustoconical or cylindrical, of inside diameter that is greater than the diameter of the inner surface of the main portion (2b) of said liner, and
- said sleeve presents at at least one end a terminal portion (1a) of thickness that is reduced relative to the thickness of the adjacent main portion (1b) of said sleeve, said terminal portion (1a) of the sleeve defining a convex shape suitable for overlapping and abutting against the concave terminal portion (2a) of reduced thickness of said liner with which it is in contact, said terminal portion (1a) of the sleeve defining an outer surface corresponding to a said contact surface of revolution (1-1), that is preferably frustoconical or cylindrical, of outside diameter that is less than the diameter of the adjacent main portion (1b) of the sleeve and a cylindrical inner surface (1-2) of substantially the same inside diameter as the diameter of the main portion (2b) of the liner and the main portion (1b) of the sleeve, and
- said inner surface of revolution constituting a said contact surface (2-1) of said liner is laser welded with said outer surface of revolution constituting a said contact surface (1-1) of said sleeve.

5. A method according to any one of claims 1 to 4, **characterized in that** a continuous weld zone (3) is made that is of spiral or helical shape (3h) or that comprises a plurality of circular weld zones (3-1, 3-2, 3-3) that are concentric or arranged side by side in parallel along the axial direction of said contact surfaces (1-1, 2-1).

6. A method according to any one of claims 1 to 5, **characterized in that** the laser head (3b) is arranged in such a manner as to emit a said laser beam in a longitudinal direction of said first and second tubes (1, 2) to a mirror (4), preferably the axial direction (XX'), in such a manner that said laser beam (3a-1) emitted by the laser head (3b) is reflected (3a-2) on the surface (4a) of the mirror (4), the surface (4a) of the mirror (4) being inclined at an angle (β) relative to the longitudinal axis (XX') of said tubes, preferably an angle (β) in the range 30 to 60°, preferably equal to 45°, and said inclined mirror is mounted so as to be capable of pivoting (R) through 360° together with said reflected laser beam (3a-2) by the mirror rotating (R) about the longitudinal axis (XX') of said tubes.

7. A method according to claim 6, **characterized in that** said mirror is mounted so as to be suitable also for moving in longitudinal translation (T) along the axis (XX'), and said mirror is caused to move in translation in combination with said mirror being caused to rotate (R) through 360° relative to said longitudinal axis (XX') of said tubes.

8. A method according to claim 6 or 7, **characterized in that** the surface (4a) of said mirror (4) is mounted so as to be suitable for being inclined at an angle of inclination (β) that is variable relative to the longitudinal direction (XX') of said tubes (1, 2), and said angle of inclination (β) of the surface (4a) of the mirror (4) is varied relative to said longitudinal direction (XX') in combination with a said rotation (R) of said mirror (4) relative to said longitudinal axis (XX').

9. A method according to any one of claims 1 to 8, **characterized in that** said internal liner tube is obtained by end-to-end assembly by laser welding of alternating short lengths of transparent first liner tubes (1) and long lengths of absorbent second liner tubes (2), by sending a laser beam (3a) against the annular plane frontal end surfaces (1-1, 2-1) of said first and second liner tubes in end-to-end contact from a laser head inside at least one of said tubes, the laser beam (3a) being inclined relative to the common longitudinal axis (XX') of said tubes, said annular plane frontal end surfaces (1-1, 2-1) being perpendicular to the axis (XX') of the first and second liner tubes, and the short lengths of the transparent first liner tubes are preferably covered in a covering of the color of said absorbent second tubes of liner.

10. A method according to claims 8 and 9, **characterized in that** said angle of inclination is varied by angularly moving said mirror step by step following a said rotation (R) of said mirror through 360° relative to the longitudinal axis (XX'), said laser welding being performed during a said rotation (R) of the mirror through 360° relative to the longitudinal axis (XX') of said tubes in order to make a plurality of circular weld zones in the form of concentric circles (3-1, 3-2, 3-3).

11. A method according to any one of claims 1 to 8, **characterized in that** transparent end portions and absorbent end portions of first and second tubes (1, 2) on a common axis are assembled together by laser welding, said transparent and absorbent end portions of the two tubes overlapping at said contact surfaces of revolution (1-1, 2-2) relative to the longitudinal axis (XX') of said tubes, and a laser beam (3a, 3a-2) is sent from a laser head inside at least one of said tubes against said contact surfaces, said laser beam being perpendicular to said contact surfaces, or being inclined (α₁), preferably in the range 0° to 30°, relative to the perpendicular to said contact surfaces (1-1, 1-2).

12. A method according to claim 11, **characterized in that** said overlapping contact surfaces of revolution (1-1, 1-2) of said first and second tubes (1, 2) for welding together are cylindrical or frustoconical in shape about the same axis as the longitudinal axis (XX') of said tubes.

13. A method according to claim 11 and either one of claims 7 or 8, **characterized in that** a said movement in continuous translation or a said continuous variation in angles of inclination is performed simultaneously with a said rotation (R) of the mirror through 360° relative to the longitudinal axis (XX') of said tubes, and a said helical weld zone is obtained on said cylindrical contact surfaces (1-1, 2-1), or a said spiral-shaped weld zone is obtained having turns of increasing diameter on said frustoconical contact surfaces.

14. A method according to claim 13, **characterized in that** a said movement in translation is performed in steps or a said variation in angle of inclination of said mirror relative to said longitudinal axis (XX') of said tubes is performed in steps, said angle of inclination being varied after a said rotation (R) of said mirror through 360° relative to the longitudinal axis (XX') of said tubes while making a said laser weld throughout a said rotation so as to make a plurality of circular zones (3-1, 3-2, 3-3) that are side by side and of the same diameter on said cylindrical contact surfaces (1-1, 2-1) or of increasing diameters on said frustoconical contact surfaces (1-1, 2-1).

15. A method according to any one of claims 1 to 14, **characterized in that** said laser welding is performed by delivering a beam with energy of 1 to 5 W/mm², preferably of 2 to 3 W/mm².

16. A method according to any one of claims 6 to 15, **characterized in that** said movements in rotation (R) of the mirror through 360° relative to the longitudinal axis (XX') of said tubes is performed at a speed of 10 revolutions per second to 1 revolution every 10 seconds.

17. A method according to any one of claims 1 to 16, **characterized in that** the quality of the laser weld is inspected by sending an inspection laser beam onto said weld zone, which beam is preferably emitted using the same device (3b, 3d) and under the same conditions of movement in rotation, translation, or varying angle of inclination as the welding beam, and by analysing by using a sensor (3r), preferably by measuring absorption, an inspection laser beam reflected on the weld zone, said inspection laser beam presenting less energy than said welding laser beam, preferably energy in the range 0.01 to 0.05 W/mm², and said inspection laser beam preferably being identical in frequency to the welding laser beam.
